(19) Europäisches Patentamt / European Patent Office / Office européen des brevets

(11) **EP 4 425 990 A1**

(12) **EUROPEAN PATENT APPLICATION**
published in accordance with Art. 153(4) EPC

(43) Date of publication:
**04.09.2024 Bulletin 2024/36**

(21) Application number: **22885881.7**

(22) Date of filing: **24.10.2022**

(51) International Patent Classification (IPC):
**H04W 24/00** (2009.01)     **H04L 25/02** (2006.01)

(52) Cooperative Patent Classification (CPC):
**H04B 7/0413; H04L 25/02; H04W 24/00**

(86) International application number:
**PCT/CN2022/127129**

(87) International publication number:
**WO 2023/072004 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.10.2021 CN 202111242524**

(71) Applicant: **Huawei Technologies Co., Ltd.
Shenzhen, Guangdong 518129 (CN)**

(72) Inventors:
• **SUN, Huan
  Shenzhen, Guangdong 518129 (CN)**
• **BI, Xiaoyan
  Shenzhen, Guangdong 518129 (CN)**
• **LIU, Yong
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57)    This application provides a communication method and apparatus, applicable to the fields such as NR and LTE, to accurately estimate a G channel or an r/R channel, so as to ensure that other subsequent channels can still be accurately estimated. The method includes: A first device receives a first reference signal and performs channel estimation based on the first reference signal. The first reference signal is a reference signal determined by a second device by performing spectrum shifting on a second reference signal, and a frequency of the first reference signal is different from a frequency of the second reference signal.

FIG. 2

**Description**

This application claims priority to Chinese Patent Application No. 202111242524.8, filed with the China National Intellectual Property Administration on October 25, 2021 and entitled "COMMUNICATION METHOD AND APPARATUS", which is incorporated herein by reference in its entirety.

**TECHNICAL FIELD**

This application relates to the communication field, and in particular, to a communication method and apparatus.

**BACKGROUND**

A reconfigurable intelligent meta-surface (reconfigurable intelligent meta-surface, RIS)-multiple input multiple output (multiple input multiple output, MIMO) system includes a G channel between a radio access network (radio access network, RAN) device and a RIS, an r/R channel between the RIS and a user equipment (user equipment, UE), and a d/D channel between the RAN device and the UE. The RAN device may first estimate the G channel based on an uplink pilot sent by the UE, and then estimate the r/R channel and the d/D channel based on the G channel, to reduce channel estimation duration.

However, a cascade channel through which the uplink pilot sent by the UE arrives at the RAN device through reflection of the RIS is a multiplicative channel, that is, the cascade channel is a product of the G channel and the r/R channel, and the RAN device cannot separate respective amplitudes and phases of the G channel and the r/R channel. Consequently, the G channel or the r/R channel cannot be accurately estimated, and estimation precision of other subsequent channels is affected.

**SUMMARY**

Embodiments of this application provide a communication method and apparatus, to accurately estimate a G channel or an r/R channel, so as to ensure that other subsequent channels can still be accurately estimated.

The following technical solutions are used in this application.

According to a first aspect, a communication method is provided. The method includes: A first device receives a first reference signal and performs channel estimation based on the first reference signal. The first reference signal is a reference signal determined by a second device by performing spectrum shifting on a second reference signal, and a frequency of the first reference signal is different from a frequency of the second reference signal.

It can be learned from the method according to the first aspect that because the first reference signal is the reference signal determined by the second device by performing spectrum shifting on the second reference signal, the first reference signal includes only a phase and an amplitude of a channel corresponding to the first reference signal, for example, a G channel or an r/R channel, but does not include a phase and an amplitude of another channel, for example, a channel corresponding to the second reference signal. Therefore, the first device can accurately estimate the G channel or the r/R channel based on the first reference signal, to ensure that other subsequent channels can still be accurately estimated.

In a possible design solution, there are a plurality of first reference signals, and frequencies of the plurality of first reference signals are different. In this way, a frequency range of the plurality of first reference signal may cover a large segment of bandwidth, for example, cover an entire system operating bandwidth or a partial system operating bandwidth, so that the first device can estimate a channel parameter, for example, an amplitude and a phase, of a channel on the bandwidth at a time, to reduce a quantity of times of channel estimation and improve channel estimation efficiency.

Optionally, frequencies of any two first reference signals are spaced by at least one subcarrier, so that subcarrier-level channel estimation can be subsequently performed on each subcarrier, with a smaller error and higher accuracy.

Optionally, that the first device receives the first reference signal may include: The first device simultaneously receives the plurality of first reference signals, or the first device receives the plurality of first reference signals in a time-sharing manner. If the first device uses a simultaneous receiving manner, receiving efficiency can be improved, to reduce overall duration for channel estimation, so as to improve channel estimation efficiency. Alternatively, if the first device uses a time-sharing receiving manner, receive power can be reduced, and device running efficiency can be improved.

Further, the first device receives the plurality of first reference signals in the time-sharing manner; the second device includes $N$ units, where $N$ is an integer greater than 1; and frequencies of first reference signals received by the first device every two times meet a first condition or a second condition, where the first condition means that a frequency of a first reference signal that is received by the first device for an $(l+j)^{th}$ time and that is from an $i^{th}$ unit of the second device is the same as a frequency of a first reference signal that is received by the first device for an $l^{th}$ time and that is from an $(i+j)^{th}$ unit of the second device, and the second condition means that a frequency of a first reference signal that is received by the first device for the $(l+j)^{th}$ time and that is from an $N^{th}$ unit of the second device is the same as a frequency of a first reference signal that is received by the first device for the $l^{th}$ time and that is from a $1^{st}$ unit of the second device, where $l$ is a positive integer, $j$ is a positive integer, and $i$ is an integer ranging from 1 to $N$-$j$. It can be learned that the second device may adjust a spectrum shifting amount of each unit through polling, so that each unit can send the first reference signal on all frequencies. Therefore, the first device can efficiently determine the channel parameter of the channel on the entire system operating bandwidth.

In a possible design solution, before the first device receives the first reference signal, the method according to the first aspect may further include: The first device sends the second reference signal, that is, the first device may implement self-sending and self-receiving. In this way, a quantity of devices participating in channel estimation can be reduced, and channel estimation efficiency can be improved.

Optionally, there are a plurality of second reference signals, that is, channel estimation is completed through a plurality of times of measurement. Based on this, frequencies of the plurality of second reference signals are different.

Further, a frequency domain spacing between any two of the plurality of second reference signals is less than a system operating bandwidth, a frequency of one of the any two second reference signals is a third value, a frequency of the other one of the any two second reference signals is a fourth value, a spectrum shifting amount of the second device for the second reference signal is a fifth value, and a sum of a positive integer multiple of the fifth value and the fourth value is the same as the third value. That is, for the plurality of times of measurement, a next time of measurement may start from a maximum frequency of a bandwidth measured through a last time of measurement. In this way, frequency ranges of any two times of measurement may not overlap, to improve measurement efficiency. In addition, because only the frequency of the second reference signal is shifted to cover a partial system operating bandwidth in each time of measurement, a shifting amplitude can be reduced, and a hardware requirement can be lowered, to accommodate more types of devices.

In a possible design solution, that the first device sends the second reference signal may include: The first device simultaneously sends the plurality of second reference signals, or the first device sends the plurality of second reference signals in a time-sharing manner. If the first device uses a simultaneous sending manner, sending efficiency can be improved, to reduce overall duration for channel estimation, so as to improve channel estimation efficiency. Alternatively, if the first device uses a time-sharing sending manner, transmit power can be reduced, and device running efficiency can be improved.

In a possible design solution, a frequency spacing between the first reference signal and the second reference signal covers the system operating bandwidth, to implement channel estimation on the system operating bandwidth.

In a possible design solution, that the first device performs channel estimation based on the first reference signal may include: The first device determines a channel parameter of a first channel based on the first reference signal, where the first device includes $M$ receive antennas, the second device includes the $N$ units, where $M$ and $N$ are integers greater than 1, the first channel includes $M*N$ subchannels, the channel parameter of the first channel includes a channel parameter of each of the $M*N$ subchannels, and the channel parameter of each subchannel includes a channel parameter of the subchannel on each subcarrier in the system operating bandwidth, to achieve more comprehensive channel estimation.

Optionally, the method according to the first aspect may further include: The first device sends the channel parameter of the first channel to a third device, so that the third device can quickly estimate another channel based on the channel parameter of the first channel, thereby improving channel estimation efficiency.

In a possible design solution, before the first device receives the first reference signal, the method according to the first aspect may further include: The first device sends configuration information to the second device, where the configuration information indicates the second device to perform spectrum shifting on the second reference signal, so that the second device can perform spectrum shifting more flexibly.

According to a second aspect, a communication method is provided. The method includes:

A second device obtains a second reference signal and sends a first reference signal. The first reference signal is a reference signal determined by the second device by performing spectrum shifting on the second reference signal, a frequency of the first reference signal is different from a frequency of the second reference signal, and the first reference signal is used for channel estimation.

In a possible design solution, there are a plurality of first reference signals, and frequencies of the plurality of first reference signals are different.

Optionally, frequencies of any two first reference signals are spaced by at least one subcarrier.

Optionally, that the second device sends the first reference signal may include: The second device simultaneously sends the plurality of first reference signals, or the second device sends the plurality of first reference signals in a time-sharing manner. If the second device uses a simultaneous sending manner, sending efficiency can be improved, to reduce overall duration for channel estimation, so as to improve channel estimation efficiency. Alternatively, if the second device uses a time-sharing sending manner, transmit power can be reduced, and device running efficiency can be improved.

Further, the second device sends the plurality of first reference signals in the time-sharing manner; the second device includes $N$ units, where $N$ is an integer greater than 1; and frequencies of first reference signals sent by the second device every two times meet a first condition or a second condition, where the first condition means that a frequency of a first reference signal sent by an $i^{th}$ unit of the second device for an $(l+j)^{th}$ time is the same as a frequency of a first reference signal sent by an $(i+j)^{th}$ unit of the second device for an $l^{th}$ time, and the second condition means that a frequency of a first reference signal sent by an $N^{th}$ unit of the second device for the $(l+j)^{th}$ time is the same as a frequency of a first reference signal sent by a $1^{st}$ unit of the second device for the $l^{th}$ time, where $l$ is a positive integer, $j$ is a positive integer, and $i$ is an integer ranging from 1 to $N$-$j$.

In a possible design solution, there are a plurality of second reference signals, and each of the second reference signals is used by the second device to determine one corresponding first reference signal, to ensure that energy of the first reference signal is large enough, for example, energy of the first reference signal is the same as energy of the second reference signal. This avoids inaccurate channel estimation caused by excessively low energy of the first reference signal.

In another possible design solution, there are a plurality of second reference signals, and each of the second reference signals is used by the second device to determine a plurality of corresponding first reference signals. In this way, spectrum shifting efficiency can be improved, and a quantity of times of spectrum shifting can be reduced, thereby improving channel estimation efficiency.

Optionally, one of any two second reference signals is used by the second device to determine S first reference signals, the other one of the any two second reference signals is used by the second device to determine T first reference signals, and frequencies of the S first reference signals are different from frequencies of the T first reference signals, where S and T are integers greater than 1.

Further, a spectrum shifting amount of the second device for the other one of the any two second reference signals is a first value, a frequency spacing between a maximum harmonic frequency and a minimum harmonic frequency of the S first reference signals is a second value, and twice the first value is greater than or equal to a positive integer multiple of the second value. In this way, overlapping of ranges of any two times of spectrum shifting can be avoided, to improve spectrum shifting efficiency, so as to improve channel estimation efficiency.

In a possible design solution, there are a plurality of second reference signals, and frequencies of the plurality of second reference signals are different.

Optionally, a frequency domain spacing between any two of the plurality of second reference signals is less than a system operating bandwidth, a frequency of one of the any two second reference signals is a third value, a frequency of the other one of the any two second reference signals is a fourth value, a spectrum shifting amount of the second device for the second reference signal is a fifth value, and a sum of a positive integer multiple of the fifth value and the fourth value is the same as the third value.

In a possible design solution, that the second device receives the second reference signal may include: The second device simultaneously receives the plurality of second reference signals, or the second device receives the plurality of second reference signals in a time-sharing manner. If the second device uses a simultaneous receiving manner, receiving efficiency can be improved, to reduce overall duration for channel estimation, so as to improve channel estimation efficiency. Alternatively, if the second device uses a time-sharing receiving manner, receive power can be reduced, and device running efficiency can be improved.

In a possible design solution, a frequency spacing between the first reference signal and the second reference signal covers the system operating bandwidth.

In a possible design solution, before the second device sends the first reference signal, the method according to the second aspect may further include: The second device receives configuration information from a first device, where the configuration information indicates the second device to perform spectrum shifting on the second reference signal.

In addition, for another technical effect of the method according to the second aspect, refer to the technical effect of the method according to the first aspect. Details are not described herein again.

According to a third aspect, a communication apparatus is provided. The apparatus includes a transceiver module and a processing module. The transceiver module is configured to receive a first reference signal; and the processing module is configured to perform channel estimation based on the first reference signal. The first reference signal is a reference signal determined by a second device by performing spectrum shifting on a second reference signal, and a frequency of the first reference signal is different from a frequency of the second reference signal.

In a possible design solution, there are a plurality of first reference signals, and frequencies of the plurality of first reference signals are different.

Optionally, frequencies of any two first reference signals are spaced by at least one subcarrier.

Optionally, the transceiver module is further configured to simultaneously receive the plurality of first reference signals, or receive the plurality of first reference signals in a time-sharing manner.

Further, the transceiver module receives the plurality of first reference signals in the time-sharing manner; the second device includes $N$ units, where $N$ is an integer greater than 1; and frequencies of first reference signals received by the transceiver module every two times meet a first condition or a second condition, where the first condition means that a frequency of a first reference signal that is received by the transceiver module for an $(l+j)^{th}$ time and that is from an $l^{th}$ unit of the second device is the same as a frequency of a first reference signal that is received by the transceiver module for an $l^{th}$ time and that is from an $(i+j)^{th}$ unit of the second device, and the second condition means that a frequency of a first reference signal that is received by the transceiver module for the $(l+j)^{th}$ time and that is from an $N^{th}$ unit of the second device is the same as a frequency of a first reference signal that is received by the transceiver module for the $l^{th}$ time and that is from a $1^{st}$ unit of the second device, where $l$ is a positive integer, $j$ is a positive integer, and i is an integer ranging from 1 to $N-j$.

In a possible design solution, the transceiver module is further configured to send the second reference signal before receiving the first reference signal.

Optionally, there are a plurality of second reference signals, and frequencies of the plurality of second reference signals are different.

Further, a frequency domain spacing between any two of the plurality of second reference signals is less than a system operating bandwidth, a frequency of one of the any two second reference signals is a third value, a frequency of the other one of the any two second reference signals is a fourth value, a spectrum shifting amount of the second device for the second reference signal is a fifth value, and a sum of a positive integer multiple of the fifth value and the fourth value is the same as the third value.

In a possible design solution, the transceiver module is further configured to simultaneously send the plurality of second reference signals, or send the plurality of second reference signals in a time-sharing manner.

In a possible design solution, a frequency spacing between the first reference signal and the second reference signal covers the system operating bandwidth.

In a possible design solution, the processing module is further configured to determine a channel parameter of a first channel based on the first reference signal. The communication apparatus according to the third aspect includes $M$ receive antennas, the second device includes the $N$ units, where $M$ and $N$ are integers greater than 1, the first channel includes $M*N$ subchannels, the channel parameter of the first channel includes a channel parameter of each of the $M*N$ subchannels, and the channel parameter of each subchannel includes a channel parameter of the subchannel on each subcarrier in the system operating bandwidth.

Optionally, the transceiver module is further configured to send the channel parameter of the first channel to a third device.

In a possible design solution, the transceiver module is further configured to send configuration information to the second device before receiving the first reference signal. The configuration information indicates the second device to perform spectrum shifting on the second reference signal.

Optionally, the transceiver module may alternatively include a sending module and a receiving module. The sending module is configured to implement a sending function of the apparatus according to the third aspect, and the receiving module is configured to implement a receiving function of the apparatus according to the third aspect.

Optionally, the apparatus according to the third aspect may further include a storage module, and the storage module stores a program or instructions. When the processing module executes the program or the instructions, the apparatus may be enabled to perform the method according to the first aspect.

It should be noted that the apparatus according to the third aspect may be a terminal or a network device, or may be a chip (system) or another component or assembly that may be disposed in a terminal or a network device, or may be an apparatus including a terminal or a network device. This is not limited in this application.

In addition, for a technical effect of the apparatus according to the third aspect, refer to the technical effect of the method according to the first aspect. Details are not described herein again.

According to a fourth aspect, a communication apparatus is provided. The apparatus includes a receiving module and a sending module. The receiving module is configured to obtain a second reference signal; and the sending module is configured to send a first reference signal. The first reference signal is a reference signal determined by the communication apparatus according to the fourth aspect by performing spectrum shifting on the second reference signal, a frequency of the first reference signal is different from a frequency of the second reference signal, and the first reference signal is used for channel estimation.

In a possible design solution, there are a plurality of first reference signals, and frequencies of the plurality of first reference signals are different.

Optionally, frequencies of any two first reference signals are spaced by at least one subcarrier.

Optionally, the sending module is further configured to simultaneously send the plurality of first reference signals, or send the plurality of first reference signals in a time-sharing manner.

Further, the sending module sends the plurality of first reference signals in the time-sharing manner; the sending module includes $N$ units, where $N$ is an integer greater than 1; and frequencies of first reference signals sent by the sending module every two times meet a first condition or a second condition, where the first condition means that a frequency of a first reference signal sent by an $i^{th}$ unit of the sending module for an $(l+j)^{th}$ time is the same as a frequency of a first reference signal sent by an $(i+j)^{th}$ unit of the sending module for an $l^{th}$ time, and the second condition means that a frequency of a first reference signal sent by an $N^{th}$ unit of the sending module for the $(l+j)^{th}$ time is the same as a frequency of a first reference signal sent by a $1^{st}$ unit of the sending module for the $l^{th}$ time, where $l$ is a positive integer, $j$ is a positive integer, and $i$ is an integer ranging from 1 to $N$-$j$.

In a possible design solution, there are a plurality of second reference signals, and each of the second reference signals is used by the communication apparatus according to the fourth aspect to determine one corresponding first reference signal.

In another possible design solution, there are a plurality of second reference signals, and each of the second reference signals is used by the communication apparatus according to the fourth aspect to determine a plurality of corresponding first reference signals.

Optionally, one of any two second reference signals is used by the communication apparatus according to the fourth aspect to determine S first reference signals, the other one of the any two second reference signals is used by the communication apparatus according to the fourth aspect to determine T first reference signals, and frequencies of the S first reference signals are different from frequencies of the T first reference signals, where S and T are integers greater than 1.

Further, a spectrum shifting amount of the communication apparatus according to the fourth aspect for the other one of the any two second reference signals is a first value, a frequency spacing between a maximum harmonic frequency and a minimum harmonic frequency of the S first reference signals is a second value, and twice the first value is greater than or equal to a positive integer multiple of the second value.

In a possible design solution, there are a plurality of second reference signals, and frequencies of the plurality of second reference signals are different.

Optionally, a frequency domain spacing between any two of the plurality of second reference signals is less than a system operating bandwidth, a frequency of one of the any two second reference signals is a third value, a frequency of the other one of the any two second reference signals is a fourth value, a spectrum shifting amount of the communication apparatus according to the fourth aspect for the second reference signal is a fifth value, and a sum of a positive integer multiple of the fifth value and the fourth value is the same as the third value.

In a possible design solution, the receiving module is further configured to simultaneously receive the plurality of second reference signals, or receive the plurality of second reference signals in a time-sharing manner.

In a possible design solution, a frequency spacing between the first reference signal and the second reference signal covers the system operating bandwidth.

In a possible design solution, the receiving module is further configured to receive configuration information from a first device before the sending module sends the first reference signal, where the configuration information indicates the communication apparatus according to the fourth aspect to perform spectrum shifting on the second reference signal.

Optionally, the sending module and the receiving module may alternatively be integrated into one module, for example, a transceiver module. The transceiver module is configured to implement a sending function and a receiving function of the apparatus according to the fourth aspect.

Optionally, the apparatus according to the fourth aspect may further include a processing module. The processing module is configured to implement a processing function of the apparatus.

Optionally, the apparatus according to the fourth aspect may further include a storage module, and the storage module stores a program or instructions. When the processing module executes the program or the instructions, the apparatus may be enabled to perform the method according to the second aspect.

It should be noted that the apparatus according to the fourth aspect may be a terminal or a network device, or may be a chip (system) or another component or assembly that may be disposed in a terminal or a network device, or may be an apparatus including a terminal or a network device. This is not limited in this application.

In addition, for a technical effect of the apparatus according to the fourth aspect, refer to the technical effect of the method according to the second aspect. Details are not described herein again.

According to a fifth aspect, a communication apparatus is provided. The apparatus includes a processor. The processor is configured to perform the method according to the first aspect or the second aspect.

In a possible design solution, the apparatus according to the fifth aspect may further include a transceiver. The transceiver may be a transceiver circuit or an interface circuit. The transceiver may be used by the apparatus to communicate with another apparatus.

In a possible design solution, the apparatus according to the fifth aspect may further include a memory. The memory and the processor may be integrated together, or may be disposed separately. The memory may be configured to store a computer program and/or data related to the method according to the first aspect or the second aspect.

In this application, the apparatus according to the fifth aspect may be a terminal or a network device in the first aspect or the second aspect, for example, the first device or the second device, a chip (system) or another component or assembly that may be disposed in a terminal or a network device, or an apparatus including a terminal or a network device.

In addition, for a technical effect of the apparatus according to the fifth aspect, refer to the technical effect of the method according to the first aspect or the second aspect. Details are not described herein again.

According to a sixth aspect, a communication apparatus is provided. The apparatus includes a processor and a memory. The memory is configured to store computer instructions. When the processor executes the instructions, the apparatus is enabled to perform the method according to the first aspect or the second aspect.

In a possible design solution, the apparatus according to the sixth aspect may further include a transceiver. The transceiver may be a transceiver circuit or an interface circuit. The transceiver may be used by the apparatus to communicate with another apparatus.

In this application, the apparatus according to the sixth aspect may be a terminal or a network device in the first aspect or the second aspect, for example, the first device or the second device, a chip (system) or another component or assembly that may be disposed in a terminal or a network device, or an apparatus including a terminal or a network device.

In addition, for a technical effect of the apparatus according to the sixth aspect, refer to the technical effect of the method according to the first aspect or the second aspect. Details are not described herein again.

According to a seventh aspect, a communication apparatus is provided. The apparatus includes a logic circuit and an input/output interface. The input/output interface is configured to receive code instructions and transmit the code instructions to the logic circuit. The logic circuit is configured to run the code instructions to perform the method according to the first aspect or the second aspect.

In this application, the apparatus according to the seventh aspect may be a terminal or a network device in the first aspect or the second aspect, for example, the first device or the second device, a chip (system) or another component or assembly that may be disposed in a terminal or a network device, or an apparatus including a terminal or a network device.

In addition, for a technical effect of the apparatus according to the seventh aspect, refer to the technical effect of the method according to the first aspect or the second aspect. Details are not described herein again.

According to an eighth aspect, a communication apparatus is provided. The apparatus includes a processor and a transceiver. The transceiver is configured to exchange information between the communication apparatus and another apparatus. The processor executes program instructions to perform the method according to the first aspect or the second aspect.

In a possible design solution, the apparatus according to the eighth aspect may further include a memory. The memory and the processor may be integrated together, or may be disposed separately. The memory may be configured to store a computer program and/or data related to the method according to the first aspect or the second aspect.

In this application, the apparatus according to the eighth aspect may be a terminal or a network device in the first aspect or the second aspect, for example, the first device or the second device, a chip (system) or another component or assembly that may be disposed in a terminal or a network device, or an apparatus including a terminal or a network device.

In addition, for a technical effect of the apparatus according to the eighth aspect, refer to the technical effect of the method according to the first aspect or the second aspect. Details are not described herein again.

According to a ninth aspect, a communication system is provided. The communication system includes one or more first devices and one or more second devices. The first device is configured to perform the method according to the first aspect, and the second device is configured to perform the method according to the second aspect.

According to a tenth aspect, a computer-readable storage medium is provided, including: a computer program or instructions. When the computer program or the instructions are run on a computer, the computer is enabled to perform the method according to the first aspect or the second aspect.

According to an eleventh aspect, a computer program product is provided, including a computer program or instructions. When the computer program or the instructions are run on a computer, the computer is enabled to perform the method according to the first aspect or the second aspect.

**BRIEF DESCRIPTION OF DRAWINGS**

FIG. 1 is a schematic diagram of an architecture of a RIS-MIMO system;
FIG. 2 is a schematic flowchart 1 of a communication method according to an embodiment of this application;
FIG. 3 is a schematic diagram 1 of a scenario of a communication method according to an embodiment of this application;

FIG. 4 is a schematic diagram 2 of a scenario of a communication method according to an embodiment of this application;

FIG. 5 is a schematic diagram 3 of a scenario of a communication method according to an embodiment of this application;

FIG. 6 is a schematic diagram 4 of a scenario of a communication method according to an embodiment of this application;

FIG. 7 is a schematic flowchart 2 of a communication method according to an embodiment of this application;

FIG. 8 is a schematic flowchart 3 of a communication method according to an embodiment of this application;

FIG. 9 is a schematic flowchart 4 of a communication method according to an embodiment of this application;

FIG. 10 is a schematic diagram 1 of a structure of a communication apparatus according to an embodiment of this application;

FIG. 11 is a schematic diagram 2 of a structure of a communication apparatus according to an embodiment of this application;

FIG. 12 is a schematic diagram 3 of a structure of a communication apparatus according to an embodiment of this application; and

FIG. 13 is a schematic diagram 4 of a structure of a communication apparatus according to an embodiment of this application.

## DESCRIPTION OF EMBODIMENTS

The following describes technical terms in embodiments of this application.

1. RIS-MIMO system

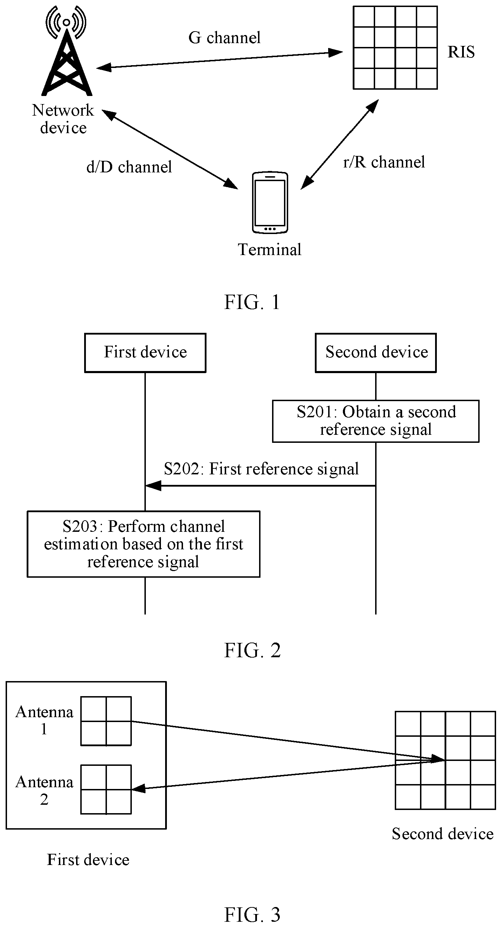

Refer to FIG. 1. ARIS is introduced into a massive (massive) MIMO system, and the new system may be referred to as a RIS-MIMO system for short. The RIS-MIMO system includes a terminal, a network device, and the RIS.

The terminal is a terminal with a wireless transceiver function, or a chip or a chip system that may be disposed in the terminal. The terminal may also be referred to as a UE, an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handset (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. Alternatively, the terminal in this application may be a vehicle-mounted module, a vehicle-mounted assembly, a vehicle-mounted component, a vehicle-mounted chip, or a vehicle-mounted unit that is built in a vehicle as one or more components or units.

The network device is a device having a wireless transceiver function, or a chip or a chip system that may be disposed in the device. The network device may include: a gNB in a 5th generation (5th generation, 5G) mobile communication system such as a new radio (new radio, NR) system, or one antenna panel or a group of antenna panels (including a plurality of antenna panels) of a base station in a 5G system. Alternatively, the network device may be a network node that forms a gNB, a transmission point (transmission and reception point, TRP, or transmission point, TP), or a transmission measurement function (transmission measurement function, TMF), for example, a baseband unit (BBU), a central unit (central unit, CU), a distributed unit (distributed unit, DU), a road side unit (road side unit, RSU) having a base station function, a wired access gateway, or the like. In addition, in a system that uses different radio access technologies, a name of the network device may vary, for example, a base transceiver station (base transceiver station, BTS) in a global system for mobile communications (global system for mobile communications, GSM) or code division multiple access (code division multiple access, CDMA) network, an NB (NodeB) in wideband code division multiple access (wideband code division multiple access, WCDMA), or an eNB or an eNodeB (evolved NodeB) in long term evolution (long term evolution, LTE). The network device may alternatively be a radio controller in a cloud radio access network (cloud radio access network, CRAN) scenario. In addition, the network device may alternatively include an access point (access point, AP) in a wireless fidelity (wireless fidelity, Wi-Fi) system, a wireless relay node, a wireless backhaul node, various forms of macro base stations, micro base stations (also referred to as small cells), relay stations, access points, wearable devices, or vehicle-mounted devices, or the like.

The RIS is mainly used to reflect a signal of the terminal or the network device in a specified direction. For example, the RIS may include a plurality of units, and each unit may be configured to reflect the signal of the terminal or the network device in the specified direction. An operating mode of the RIS is a full-duplex (full-duplex) mode. The network device can take advantage of such a feature of the RIS to actively control quality of a radio channel between the network device and the terminal (for example, increase a link gain, and increase a quantity of sub-eigenchannels), so as to improve system performance such as spectrum efficiency (spectrum efficiency, SE) or energy efficiency (energy efficiency, EE).

2. Channel estimation of a RIS-MIMO system

A channel in the RIS-MIMO system is more complex than a channel in a conventional massive MIMO system, and includes a direct channel between the terminal and the network device, which is also referred to as a d/D channel, a direct channel between the RIS and the network device, which is also referred to as a G channel, a direct channel between the RIS and the terminal, which is also referred to as an r/R channel, and a cascade channel of the network device-the RIS-the terminal. It should be noted that for the r/R channel, if the terminal is configured with one antenna, the direct channel between the RIS and the terminal is a vector, which is represented as an r channel; or if the terminal is configured with a plurality of antennas, the direct channel between the RIS and the terminal is a matrix, which is represented as an R channel. Similarly, for the d/D channel, if the terminal is configured with one antenna, the direct channel between the network device and the terminal is a vector, which is represented as a d channel; or if the terminal is configured with a plurality of antennas, the direct channel between the network device and the terminal is a matrix, which is represented as a D channel. For ease of description, the following uses the d channel and the r channel as examples for description.

Currently, there are two manners for channel estimation of the RIS-MIMO system. Manner 1 is to directly estimate the cascade channel of the network device-the RIS-the terminal. Manner 2 is to estimate the G channel first, and then estimate the d channel and the r channel based on the G channel, or estimate the r channel first, and then estimate the G channel and the d channel based on the r channel. The following separately provides descriptions.

Manner 1: A unit phase control matrix of the RIS is a diagonal matrix, and each diagonal element in the diagonal matrix is used for reflection of a corresponding unit in the RIS. If the unit phase control matrix is represented as $\varphi$, the diagonal element $\varphi_i$ of the unit phase control matrix may be represented as $\beta_i exp(j\varphi_i)$, where $\beta_i$ is a reflection coefficient and may be assumed to be 1. Based on this, the cascade channel $h(\varphi)$ of the network device-the RIS-the terminal may be expressed as the following formula 1:

$$h(\varphi) = r \underset{diagnalMatrix}{\varphi} G + d \quad (1)$$

*diag* function deformation is performed on the formula 1, and the formula 1 may be expressed as the following formula 2:

$$h(\varphi) = r \underset{diagnalMatrix}{\varphi} G + d = \begin{bmatrix} \underset{diag(\varphi)}{q^H} & 1 \end{bmatrix} \begin{bmatrix} diag(r)G \\ d \end{bmatrix} \triangleq h(q) \quad (2)$$

In the formula 2, $h(q)$ is a known value of channel measurement, $\underset{diag(\varphi)}{q^H}$ is $N$ diagonal elements of the unit phase control matrix, $\begin{bmatrix} \underset{diag(\varphi)}{q^H} & 1 \end{bmatrix}$ is a *1\*(N+1)* matrix, and a cascade channel from the network device to the terminal is $\begin{bmatrix} diag(r)G \\ d \end{bmatrix}$, that is, the network device needs to solve $\begin{bmatrix} diag(r)G \\ d \end{bmatrix}$ according to the formula 2. Therefore, the matrix $\begin{bmatrix} \underset{diag(\varphi)}{q^H} & 1 \end{bmatrix}$ in the formula 2 needs to be converted into an identity matrix. Based on this, it is assumed that for an i$^{th}$ time of channel measurement, the formula 2 may be expressed as the following formula 3:

$$\begin{bmatrix} \underbrace{q_i^H}_{diag(\varphi)} & 1 \end{bmatrix} \begin{bmatrix} diag(r)G \\ d \end{bmatrix} \triangleq h(q_i) \quad (3)$$

After *N+1* times of measurement, the formula 3 may be simultaneously expressed as the following formula 4:

$$\begin{bmatrix} \underbrace{q_1^H}_{diag(\varphi)} & 1 \\ \cdots \\ \underbrace{q_{N+1}^H}_{diag(\varphi)} & 1 \end{bmatrix} \begin{bmatrix} diag(r)G \\ d \end{bmatrix} \triangleq \begin{bmatrix} h(q_1) \\ \cdots \\ h(q_{N+1}) \end{bmatrix} \quad (4)$$

It can be learned from the formula 4 that a matrix $\begin{bmatrix} \underbrace{q_1^H}_{diag(\varphi)} & 1 \\ \cdots \\ \underbrace{q_{N+1}^H}_{diag(\varphi)} & 1 \end{bmatrix}$ is a *(N+1)\*(N+1)* full-rank matrix, inverse matrix deformation is performed on the formula 4, and the formula 4 may be further expressed as the following formula 5.

$$\begin{bmatrix} diag(r)G \\ d \end{bmatrix} \triangleq \begin{bmatrix} h(q_1) \\ \cdots \\ h(q_{N+1}) \end{bmatrix} \begin{bmatrix} \underbrace{q_1^H}_{diag(\varphi)} & 1 \\ \cdots \\ \underbrace{q_{N+1}^H}_{diag(\varphi)} & 1 \end{bmatrix}' \quad (5)$$

Therefore, the network device may determine a phase and an amplitude of the cascade channel of the network device-the RIS-the terminal according to the formula 5, to complete channel estimation of the cascade channel. In other words, to estimate the cascade channel of the network device-the RIS-the terminal, the *N+1* times of channel measurement need to be performed, and the measurement takes long time, resulting in poor timeliness of channel estimation.

Manner 2: For example, the G channel is preferentially estimated. If the G channel is known, the d channel and the r channel can be efficiently estimated, that is, estimation of the d channel and the r channel can be completed by performing a small quantity of times of channel measurement. A specific implementation is as follows:

On a basis that the G channel is known, if the network device includes *M* antennas, and the RIS includes *N* units, the foregoing formula 2 may be expressed as the following formula 6, where *N* and *M* are integers greater than 1:

$$r \underbrace{\varphi}_{diagnalMatrix} G + d = [r \quad d] \begin{bmatrix} \underbrace{\varphi_{N*M} \quad G_{N*M}}_{N*M} \\ I_{M*M} \end{bmatrix}_{(N+M)*M} \triangleq h(q) \quad (6)$$

In the formula 6, $I_{M*M}$ is an *M\*M* identity matrix, and $\begin{bmatrix} \underbrace{\varphi_{N*M} \quad G_{N*M}}_{N*M} \\ I_{M*M} \end{bmatrix}_{(N+M)*M}$ is a rank-deficient skin matrix. Based on this, if [(N + M)/M] (rounded up) times of channel measurement are performed, the formula 6 may be simultaneously shown as the following formula 7:

$$[r \quad d] \begin{bmatrix} \underbrace{\varphi_{N*M}^1 \quad G_{N*M}^1}_{N*M} & \cdots & \underbrace{\varphi_{N*M}^{[(N+M)/M]} \quad G_{N*M}^{[(N+M)/M]}}_{N*M} \\ I_{M*M} & \cdots & I_{M*M} \end{bmatrix} \triangleq$$

$$\begin{bmatrix} h(q_1) & \cdots & h\left(q_{[(N+M)/M]}\right) \end{bmatrix} \quad (7)$$

$$\left[\begin{array}{ccc} \underbrace{\varphi_{N*M}^{1} \quad G_{N*M}^{1}}_{N*M} & \cdots & \underbrace{\varphi_{N*M}^{[(N+M)/M]} \quad G_{N*M}^{[(N+M)/M]}}_{N*M} \\ I_{M*M} & \cdots & I_{M*M} \end{array}\right]$$

It can be learned from the formula 7 that a matrix is a full-rank fat matrix, so that inverse matrix deformation may be performed on the formula 7, and the formula 7 may be further expressed as the following formula 8:

$$[r \quad d] \triangleq$$

$$\left[h(q_1) \quad \cdots \quad h\left(q_{[(N+M)/M]}\right)\right] \left[\begin{array}{ccc} \underbrace{\varphi_{N*M}^{1} \quad G_{N*M}^{1}}_{N*M} & \cdots & \underbrace{\varphi_{N*M}^{[(N+M)/M]} \quad G_{N*M}^{[(N+M)/M]}}_{N*M} \\ I_{M*M} & \cdots & I_{M*M} \end{array}\right]' \quad (8)$$

Therefore, the network device may determine the d channel and the r channel according to the formula 8. That is, on the basis that the G channel is known, phases and amplitudes of the d channel and the r channel may be determined through the $[(N + M)/M]$ times of channel measurement, to complete channel estimation of the d channel and the r channel. Compared with the $N+1$ times of channel measurement in Manner 1, a quantity of times of measurement is greatly reduced, so that timeliness of channel estimation can be improved. However, a problem is as follows: When the G channel is pre-estimated, a cascade channel through which an uplink pilot sent by the terminal arrives at the network device through reflection of the RIS is a multiplicative channel, that is, the cascade channel is a product of the G channel and the r channel, and the network device cannot separate respective amplitudes and phases of the G channel and the r channel. Consequently, the phase and the amplitude of the G channel cannot be accurately determined, and estimation precision of the r channel and the d channel is affected.

In view of the foregoing technical problem, embodiments of this application provide the following solutions. The technical solutions in embodiments of this application are not limited to the RIS-MIMO system shown in FIG. 1, and may be further applied to various communication systems, for example, a wireless fidelity (wireless fidelity, Wi-Fi) system, a vehicle to everything (vehicle to everything, V2X) communication system, a device-to-device (device-to-device, D2D) communication system, an Internet of vehicles communication system, a 4th generation (4th generation, 4G) mobile communication system such as a long term evolution (long term evolution, LTE) system, a 5G mobile communication system such as an NR system, and a future communication system such as a 6th generation (6th generation, 6G) mobile communication system.

All aspects, embodiments, or features are presented in this application by describing a system that may include a plurality of devices, components, and modules, and the like. It should be appreciated and understood that, each system may include another device, component, and module, and the like, and/or may not include all devices, components, and modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the word "for example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. The terms "of (of)", "corresponding (corresponding, relevant)", and "corresponding (corresponding)" may sometimes be interchangeably used. It should be noted that meanings expressed by the terms are consistent when differences of the terms are not emphasized. The term "simultaneous" mentioned in embodiments of this application is not limited to simultaneousness in an absolute sense, that is, identicalness. A case in which two objects have a very small difference may also be considered simultaneous.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes in detail communication methods provided in embodiments of this application with reference to FIG. 2 to FIG. 9.

For example, FIG. 2 is a schematic flowchart 1 of a communication method according to an embodiment of this application. The communication method is applicable to communication among the network device, the RIS, and the terminal in the RIS-MIMO system shown in FIG. 1. As shown in FIG. 2, the communication method includes S201, S202, and S203.

S201: A second device obtains a second reference signal.

The second device may be the RIS in the RIS-MIMO system, or may be any other possible device that can implement a RIS function, for example, a full-duplex relay or a reflective array antenna. The second reference signal may be a pilot with a narrowband feature, may also be referred to as a second pilot signal, and may be used for subsequent channel estimation. For example, the second device may perform spectrum shifting on the second reference signal, that is, adjust a frequency of the second reference signal, to obtain a first reference signal whose frequency is different from the frequency of the second reference signal, so as to perform channel estimation by using the first reference signal, for example, perform estimation on a first channel between a first device and the second device. For a specific implementation, refer to related descriptions in S202 and S203. Details are not described herein again. That the second device obtains the second reference signal may be that the second device receives the second reference signal. For example, the first device sends the second reference signal, and correspondingly, the second device receives the second reference signal from the first device. Alternatively, a third device sends the second reference signal, and correspondingly the second device receives the second reference signal from the third device. The first device may be the network device in the RIS-MIMO system, and the third device may be the terminal in the RIS-MIMO system. Alternatively, the first device may be the terminal in the RIS-MIMO system, and the third device may be the network device in the RIS-MIMO system. This is not limited in this application. It should be noted that, if the first device supports a full-duplex mode, the first device may send the second reference signal. For example, as shown in FIG. 3, some antennas (denoted as antennas 1) of the first device send the second reference signal, some other antennas (denoted as antennas 2) of the first device simultaneously receive the first reference signal reflected by the second device (where reference may be made to the following S202), to implement self-sending and self-receiving, so that a quantity of devices participating in channel estimation can be reduced, and channel estimation efficiency can be improved. In addition, there may be one or more first devices or third devices. That is, the second device may receive a second reference signal from a same first device or third device, or may receive second reference signals from different first devices or third devices. Certainly, that the second device receives the second reference signal is merely an example, and is not limited. For example, that the second device obtains the second reference signal may alternatively be that the second device generates the second reference signal. For ease of understanding, an example in which the second device receives the second reference signal is used below for description.

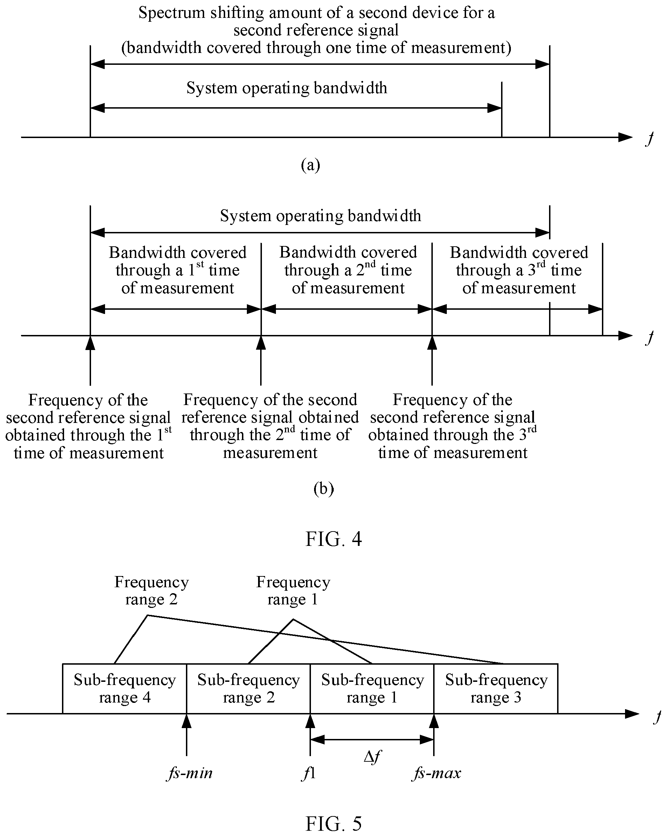

For example, as shown in (a) in FIG. 4, if a bandwidth range of a spectrum shifting amount of the second device for the second reference signal (referred to as a spectrum shifting amount of the second device below) can cover a system operating bandwidth, for example, the system operating bandwidth is 20 MHz, 100 MHz, or another authorized bandwidth, channel estimation can be performed in the entire system operating bandwidth through one time of measurement, for example, by sending the second reference signal once or sending one second reference signal by the first device or the third device. The second device includes a plurality of units, for example, $N$ units, where $N$ is an integer greater than 1, and each unit may receive one corresponding second reference signal. Therefore, there may be a plurality of second reference signals, for example, $N$ second reference signals, and frequencies of the plurality of second reference signals are the same. It should be noted that the spectrum shifting amount of the second device is usually a range value. For ease of understanding, unless otherwise specified, the spectrum shifting amount mentioned in this application usually refers to a maximum value in the range.

Alternatively, for example, as shown in (b) in FIG. 4, if a bandwidth range of a spectrum shifting amount of the second device cannot cover a system operating bandwidth, channel estimation can be performed in the entire system operating bandwidth through a plurality of times of measurement, for example, by sending a plurality of second reference signals by the first device or the third device. In this case, because each unit may receive a plurality of corresponding second reference signals, a quantity of second reference signals may be $N$ multiplied by a quantity of times of measurement, for example, $2N$, $3N$, or $4N$. For example, the first device may simultaneously send the plurality of second reference signals, or the first device may send the plurality of second reference signals in a time-sharing manner. If the first device uses a simultaneous sending manner, sending efficiency can be improved, to reduce overall duration for channel estimation, so as to improve channel estimation efficiency. Alternatively, if the first device uses a time-sharing sending manner, transmit power can be reduced, and device running efficiency can be improved. Correspondingly, the second device may simultaneously receive the plurality of second reference signals, or the second device may receive the plurality of second reference signals in a time-sharing manner. If the second device uses a simultaneous receiving manner, receiving efficiency can be improved, to reduce overall duration for channel estimation, so as to improve channel estimation efficiency. Alternatively, if the second device uses a time-sharing receiving manner, receive power can be reduced, and device running efficiency can be improved. It should be noted that for one measurement, a quantity of the plurality of second reference signals sent by the first device is different from a quantity of the plurality of second reference signals received by the second device, and the quantity of the plurality of second reference signals received by the second device is $N$ times the quantity of the plurality of second reference signals sent by the first device. For the plurality of second reference signals sent by the first device, frequencies of the plurality of second reference signals may be different. For example, a frequency domain spacing between any two (respectively denoted as a second reference signal 1 and a second reference signal 2) of the plurality of second reference signals is less than the system operating bandwidth, a frequency of the second reference signal 1 is a third value, a frequency of the second reference signal 2 is a fourth value, and a spectrum shifting amount of the second device is a fifth value. In this case, the third value, the fourth value, and the fifth value may meet a specific relationship. For example, a sum of a positive integer multiple of the fifth value and the fourth value is the same as the third value, which is expressed as the following formula 9:

$$f_2 = f_1 + k * \Delta F \quad (9)$$

$f_2$ is the frequency (the third value) of the second reference signal 1, $f_1$ is the frequency (the fourth value) of the second reference signal 2, $k$ is a positive integer, and $\Delta F$ is the spectrum shifting amount (the fifth value) of the second device. That is, for the plurality of times of measurement, a next time of measurement may start from a maximum frequency of a bandwidth measured through a last time of measurement. In this way, frequency ranges of any two times of measurement may not overlap, to improve measurement efficiency. For example, as shown in (b) in FIG. 4, a frequency of a second reference signal obtained through a first time of measurement is equal to a minimum frequency of the system operating bandwidth, a frequency of a second reference signal obtained through a second time of measurement is equal to a maximum frequency of a bandwidth covered by the first time of measurement, a frequency of a second reference signal obtained through a third time of measurement is equal to a maximum frequency of a bandwidth covered by the second time of measurement, and so on. It can be learned that the frequency of the second reference signal is adjusted, so that the spectrum shifting amount of the second device can cover different bandwidths. In this case, the entire system operating bandwidth can be covered through at least $[F_b / \Delta F]$ (rounded up) times of measurement, to implement channel estimation on the entire system operating bandwidth. In addition, because only the frequency of the second reference signal is shifted to cover a partial system operating bandwidth in each time of measurement, a shifting amplitude can be reduced, and a hardware requirement can be lowered, to accommodate more types of devices.

It should be noted that the one or more times of measurement are merely an example, and are not limited. For example, a plurality of times of measurement may alternatively be performed on a bandwidth covered by the spectrum shifting amount of the second device, to implement more comprehensive and accurate channel estimation. For a specific implementation, refer to the related descriptions in S203. Details are not described herein again.

S202: The second device sends a first reference signal. Correspondingly, the first device receives the first reference signal.

The first reference signal is a reference signal determined by the second device by performing spectrum shifting on the second reference signal, and a frequency of the first reference signal is different from the frequency of the second reference signal. Specifically, for one measurement, the second device may receive a plurality of second reference signals. Therefore, there are also a plurality of first reference signals determined by the second device by performing spectrum shifting on the second reference signals, where frequencies of the plurality of first reference signals may be different. In this case, a frequency range of the plurality of first reference channels may cover a large segment of bandwidth, for example, cover an entire system operating bandwidth or a partial system operating bandwidth, so that the first device can estimate a channel parameter, for example, an amplitude and a phase, of a channel on the bandwidth at a time, to reduce a quantity of times of channel estimation and improve channel estimation efficiency. The following provides detailed descriptions.

Manner A: For one measurement, each second reference signal may be used by the second device to determine one corresponding first reference signal, to determine a plurality of first reference signals in total, so as to ensure that energy of the first reference signal is high enough, for example, the energy of the first reference signal is the same as energy of the second reference signal. This avoids inaccurate channel estimation caused by excessively low energy of the first reference signal. For each unit of the second device, each unit may independently perform continuous spectrum shifting on one received first reference signal, or perform continuous adjustment and control on a phase of the first reference signal, to obtain one corresponding first reference signal. The following provides descriptions by using an example.

Example 1: The $N$ units of the second device form a $P*Q$ array, where $P$ and $Q$ are positive integers. In this case, in the $N$ units, a phase adjustment and control degree or a phase adjustment and control amount of a $(p,q)$th unit for a signal in one time unit may be shown in the following formula 10. The time unit may be any one of the following: a frame (frame), a subframe (subframe), a slot (slot), a sub-slot (sub-slot), a symbol (symbol), and the like.

$$\Delta\varphi(t)_{p,q} = \Delta f_{p,q}(t), 0 < t \le T_s \quad (10)$$

$\Delta f_{p,q}$ is a value related with $(p, q)$. $\Delta\varphi(t)$ is a predefined function, for example, a sine function, a cosine function, or any other possible function, and indicates the phase adjustment and control degree of the $(p,q)^{th}$ unit for the signal in the time unit. $T_s$ is the time unit, and $t$ is a time variable in the time unit. The phase adjustment and control degree of the $(p,q)^{th}$ unit for the signal in the time unit may also reflect a spectrum shifting amount $\Delta F_{p,q}$ of the unit. A maximum spectrum shifting amount of the $(p,q)^{th}$ unit may be greater than or equal to the system operating bandwidth, that is, cover the system operating bandwidth. In this case, only one time of measurement may be performed on the $(p,q)^{th}$ unit; or optionally, a plurality of times of measurement may be performed on the $(p,q)^{th}$ unit, to implement more accurate channel estimation. Alternatively, a maximum spectrum shifting amount of the $(p,q)^{th}$ unit may be less than the system operating bandwidth. In this case, a plurality of times of measurement need to be performed on the $(p,q)^{th}$ unit, so that bandwidths obtained through the plurality of times of measurement can cover the system operating bandwidth.

If a phase control function of the $(p,q)^{th}$ unit may be shown in the following formula 11, a phase control function of a $(1,1)^{th}$ unit may be shown in the following formula 12.

$$W_{p,q} = e^{-j2\pi f_x[(p-1)N+q]t}, 0 < t \le T_s \quad (11)$$

$$W_{1,1} = e^{-j2\pi f_x t}, 0 < t \le T_s \quad (12)$$

$W_{p,q}$ is the phase control function of the $(p,q)^{th}$ unit, and a value of $W_{p,q}$ varies with the time variable $t$. Therefore, $W_{p,q}$ may also be referred to as a time-varying phase control function. Similarly, $W_{1,1}$ is the phase control function of the $(1,1)^{th}$ unit. Based on this, if one second reference signal received by the $(1, 1)^{th}$ unit may be shown in the following formula 13, one first reference signal obtained by the $(1,1)^{th}$ unit by performing spectrum shifting on the second reference signal may be shown in the following formula 14.

$$s(t) = x_u e^{-j2\pi f_c t}, 0 < t \le T_s \quad (13)$$

$$r(t) = W_{1,1}s(t) = x_u e^{-j2\pi(f_c + f_x)t}, 0 < t \le T_s \quad (14)$$

$s(t)$ is the second reference signal received by the $(1,1)^{th}$ unit, $x_u$ is a pilot, $f_c$ is a carrier frequency of the second reference signal, and $r(t)$ is the first reference signal obtained by the $(1,1)^{th}$ unit by performing spectrum shifting on the second reference signal. A spectrum shifting amount of the $(1,1)^{th}$ unit for the second reference signal is $f_x$, that is, the first reference signal is obtained by shifting a frequency of the second reference signal from $f_c$ to $f_c + f_x$. By analogy, a spectrum shifting amount of the $(p,q)^{th}$ unit for one received second reference signal may be shown in the following formula 15.

$$\Delta f_{p,q} = f_x[(p-1)N + q] \quad (15)$$

In this case, if $f_x$ is set to one or more subcarrier spacings, each unit may shift a frequency of one received second reference signal to one corresponding subcarrier, and different units may shift frequencies of received second reference signals to different subcarriers. For example, the $(1,1)^{th}$ unit may shift a frequency of one received second reference signal to a $1^{st}$ subcarrier, a $(1,2)^{th}$ unit may shift a frequency of one received second reference signal to a $2^{nd}$ subcarrier, a $(2,1)^{th}$ unit may shift a frequency of one received second reference signal to an $(N+1)^{th}$ subcarrier, and so on. In this way, frequencies of any two first reference signals may be spaced by at least one subcarrier, so that subcarrier-level channel estimation can be subsequently performed on each subcarrier, with a smaller error and higher accuracy.

Manner B: For one measurement, each second reference signal may be used by the second device to determine a plurality of corresponding first reference signals, to determine a plurality of first reference signals in total. In this way, spectrum shifting efficiency can be improved, and a quantity of times of spectrum shifting can be reduced, thereby improving channel estimation efficiency. For each unit of the second device, each unit may independently perform harmonic modulation on one received second reference signal, to obtain a plurality of corresponding first reference signals. The plurality of first reference signals are also referred to as a plurality of harmonic components of the first reference signal. For example, any two second reference signals (respectively denoted as a second reference signal 3 and a second reference signal 4), and any two units (respectively denoted as a unit 1 and a unit 2) are used as an example. The second reference signal 3 is used by the second device to determine S first reference signals, or when receiving the second reference signal 3, the unit 1 may obtain S first reference signals by performing harmonic modulation on the second reference signal 3. The second reference signal 4 is used by the second device to determine T first reference signals, or when receiving the second reference signal 4, the unit 2 may obtain T first reference signals by performing harmonic modulation on the second reference signal 4. As shown in FIG. 5, frequencies of the S first reference signals are different from frequencies of the T first reference signals, where S and T are integers greater than 1. The S first reference signals may form a frequency range (denoted as a frequency range 1). The frequency range 1 includes two sub-frequency range: a sub-frequency range 1 and a sub-frequency range 2. The sub-frequency range 1 is a frequency range of some of the S first reference signals, and the sub-frequency range 2 is a frequency range of mirror signals in the frequency range of the some of the S first reference signals. The T first reference signals may form another frequency range (denoted as a frequency range 2). The frequency range 2 also includes two sub-frequency ranges: a sub-frequency range 3 and a sub-frequency range 4. The sub-frequency range 3 is a frequency range of some of the T first reference signals, and the sub-frequency range 4 is a frequency range of mirror signals in the frequency range of the some of the T first reference signals. In this case, if a spectrum shifting amount of the second device (or the unit 2 of the second device) for the second reference signal 4 is a first value, and a frequency spacing between a maximum harmonic frequency and a minimum harmonic frequency of the S first reference signals is a second value (namely, the frequency range 1), a relationship between the first value and the second value may meet that twice the first value is greater than or equal to a positive integer multiple of the second value, and is expressed as the following formula 16 and formula 17:

$$\Delta f \geq k * \frac{B_r}{2} \ (16)$$

$$B_r = max\{f_{S-max}, f_1\} - min\{f_{S-min}, f_1\} \ (17)$$

$\Delta f$ is the spectrum shifting amount of the second device for the second reference signal 4, k is a positive integer, $f_{S-max}$ is the maximum harmonic frequency of the S first reference signals, $f_{S-min}$ is the minimum harmonic frequency of the S first reference signals, and $f_1$ is a frequency of a second reference signal received by the unit 1. In this way, overlapping of ranges of any two times of spectrum shifting, for example, overlapping of the frequency range 1 and the frequency range 2, can be avoided, thereby improving spectrum shifting efficiency, and further improving channel estimation efficiency.

In addition, for the plurality of harmonic components of the first reference signal, each harmonic component may also be obtained through modulation by using the time-varying phase control function in the foregoing Manner A, so that the plurality of harmonic components may also be on subcarriers corresponding to the plurality of harmonic components, and frequencies of any two harmonic components may be spaced by at least one subcarrier, to subsequently perform subcarrier-level channel estimation on each subcarrier.

It should be noted that, if channel estimation is implemented through self-sending and self-receiving of the first device, it can be learned from the related descriptions in S201 that the spectrum shifting amount of the second device further needs to meet: The frequency of the second reference signal is shifted from a system operating bandwidth of the antenna 1 to a system operating bandwidth of the antenna 2, which is expressed as the following formula 18:

$$\Delta F \geq |f_{c1} - f_{c2}| + B_{eff} \ (18)$$

If $f_{c1}$ is greater than $f_{c2}$, $f_{c1}$ may be a minimum frequency of the system operating bandwidth of the antenna 1, and $f_{c2}$ may be a maximum frequency of the system operating bandwidth of the antenna 2, or $f_{c2}$ may be a maximum frequency of the system operating bandwidth of the antenna 1, and $f_{c1}$ may be a minimum frequency of the system operating bandwidth of the antenna 2. $B_{eff}$ is the system operating bandwidth of the antenna 1.

Further, for one measurement, the second device may send a plurality of first reference signals. For example, each unit of the second device may send one corresponding first reference signal. In a possible manner, the second device simultaneously sends a plurality of first reference signals, or the second device sends a plurality of first reference signals in a time-sharing manner. It may be understood that if the second device uses a simultaneous sending manner, sending efficiency can be improved, to reduce overall duration for channel estimation, so as to improve channel estimation efficiency. Alternatively, if the second device uses a time-sharing sending manner, transmit power can be reduced, and device running efficiency can be improved. Correspondingly, the first device simultaneously receives the plurality of second reference signals, or the first device receives the plurality of second reference signals in a time-sharing manner.

It may be understood that if the first device uses a simultaneous receiving manner, receiving efficiency can be improved, to reduce overall duration for channel estimation, so as to improve channel estimation efficiency. Alternatively, if the first device uses a time-sharing receiving manner, receive power can be reduced, and device running efficiency can be improved. It should be noted that the first device may have $M$ antennas, where $M$ is a positive integer, and each antenna may receive a plurality of first reference signals from the second device. Therefore, a quantity of the plurality of first reference signals sent by the second device may be different from a quantity of the plurality of first reference signals received by the first device, the quantity of the plurality of first reference signals received by the first device is $M$ times the quantity of the plurality of first reference signals sent by the second device, and there are a total of $M*N$ first reference signals.

S203: The first device performs channel estimation based on the first reference signal.

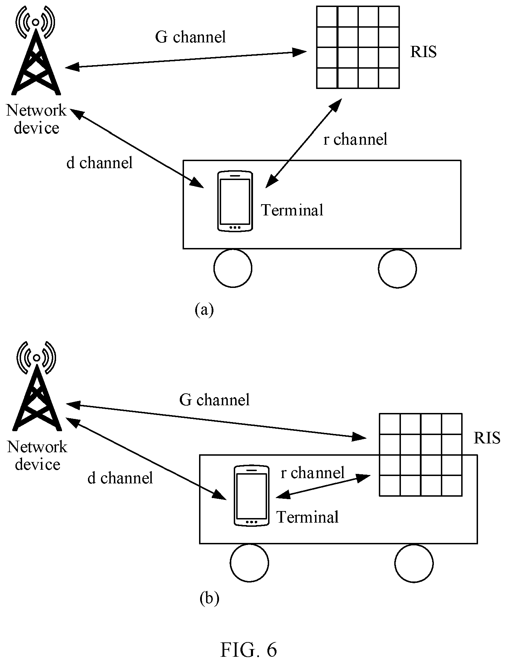

That the first device performs channel estimation based on the first reference signal may mean that the first device determines a channel parameter, for example, a phase and an amplitude, of a first channel based on the first reference signal. The first channel may be a channel between the first device and the second device. If the first device is the network device, the first channel is the G channel; or if the first device is the terminal, the first channel is the r channel. In other words, in this embodiment of this application, channel estimation may be performed on the G channel or the r channel. This depends on an actual application scenario. For example, as shown in (a) in FIG. 6, the network device (the first device) and the RIS (the second device) are mounted at fixed positions, and the terminal is located on a movable object, for example, a vehicle or a subway. In this case, the G channel is a slow-varying channel (where a channel parameter of the G channel changes slowly), and the r channel is a fast-varying channel (where a channel parameter of the r channel changes rapidly). Therefore, channel estimation can be performed on the G channel, to reduce a quantity of times of channel estimation and improve channel estimation efficiency. For another example, as shown in (b) in FIG. 6, the network device is mounted at a fixed position, and the RIS (the second device) and the terminal (the first device) are located on a movable object. In this case, the G channel is a fast-varying channel (where a channel parameter of the G channel changes rapidly), and the r channel is a slow-varying channel (where a channel parameter of the r channel changes slowly). Therefore, channel estimation can be performed on the r channel, to reduce a quantity of times of channel estimation and improve channel estimation efficiency. Certainly, the foregoing scenario is merely an example, and is not limited. For example, when the G channel or the r channel is a fast-varying channel, channel estimation can still be performed on the G channel or the r channel.

For one measurement, the first device receives $M*N$ first reference signals, and each first reference signal may be used by the first device to perform channel estimation on one corresponding subchannel of the first channel, to determine a channel parameter of each subchannel on a frequency of a corresponding first reference signal. For example, a frequency of a first reference signal 1 is $f1$, and the first device determines a channel parameter of a subchannel 1 on the frequency $f1$ based on the first reference signal 1; a frequency of a first reference signal 2 is $f2$, and the first device determines a channel parameter of a subchannel 2 on the frequency $f2$ based on the first reference signal 2; a frequency of a first reference signal 3 is $f3$, and the first device determines a channel parameter of a subchannel 3 on the frequency $f3$ based on the first reference signal 3; and so on. In this case, to determine the channel parameter of each subchannel in the entire system operating bandwidth, two manners may be used for implementation.

Manner a: A plurality of times of measurement are performed for implementation.

The first device may perform a plurality of times of measurement on the bandwidth covered by the spectrum shifting amount of the second device, and for any two times of measurement, a frequency (for example, a subcarrier) of a first reference signal corresponding to each subchannel is different, so that frequencies obtained through the plurality of times of measurement can cover the bandwidth, to determine the channel parameter of each subchannel in the entire system operating bandwidth (for example, all subcarriers in the system operating bandwidth).

Specifically, the second device may adjust a spectrum shifting amount of each unit through polling, so that frequencies (for example, subcarriers) of first reference signals sent by the second device every two times (that is, measured every two times), that is, frequencies of first reference signals received by the first device every two times (that is, measured every two times), meet a first condition or a second condition. The first condition means that a frequency of a first reference signal sent by an $i$th unit of the second device for an $(l+j)$th time is the same as a frequency of a first reference signal sent by an $(i+j)$th unit of the second device for an $l$th time. In other words, the frequency of the first reference signal that is received by the first device for the $(l+j)$th time and that is from the $i$th unit of the second device is the same as the frequency of the first reference signal that is received by the first device for the $l$th time and that is from the $(i+j)$th unit of the second device. The second condition means that a frequency of a first reference signal sent by an $N$th unit of the second device for an $(l+j)$th time is the same as a frequency of a first reference signal sent by a $1$st unit of the second device for an $l$th time. In other words, the frequency of the first reference signal that is received by the first device for the $(l+j)$th time and that is from the $N$th unit of the second device is the same as the frequency of the first reference signal that is received by the first device for the $l$th time and that is from the $1$st unit of the second device. $l$ is a positive integer, $j$ is a positive integer, and $i$ is an integer ranging from 1 to $N-j$. Therefore, each unit can send the first reference signal on all frequencies, so that the first device can efficiently determine the channel parameter of the channel on the entire system operating bandwidth. For ease of understanding, the first condition may be expressed as the following formula 19, and the second condition may be expressed as the following formula 20.

$$f_i^{l+j} = f_{i+j}^l \quad (19)$$

$$f_N^{l+j} = f_1^l \quad (20)$$

$f_i^{l+j}$ is the frequency of the first reference signal sent by the $i$th unit for the $(l+j)$th time, $f_{i+1}^l$ is the frequency of the first reference signal sent by the $(i+j)$th unit for the $l$th time, $f_N^{l+j}$ is the frequency of the first reference signal sent by the $N$th unit for the $(l+j)$th time, and $f_1^l$ is the frequency of the first reference signal sent by the 1st unit for the $l$th time. The following uses an example for description.

Example 2: If there are five units of the second device, there are five subcarriers that need to be measured in the bandwidth covered by the spectrum shifting amount of the second device and that are $f_1$ to $f_5$ respectively, and if $j$ in the foregoing formula 19 and formula 20 is 1, a frequency of a first reference signal sent by each unit may be adjusted according to the following Table 1. In this way, the first device may determine channel parameters of each subchannel on the five subcarriers through five times of measurement.

**Table 1**

| Unit index | 1st time of measurement | 2nd time of measurement | 3rd time of measurement | 4th time of measurement | 5th time of measurement |
|---|---|---|---|---|---|
| 0 | $f_1$ | $f_2$ | $f_3$ | $f_4$ | $f_5$ |
| 1 | $f_2$ | $f_3$ | $f_4$ | $f_5$ | $f_1$ |
| 2 | $f_3$ | $f_4$ | $f_5$ | $f_1$ | $f_2$ |
| 3 | $f_4$ | $f_5$ | $f_1$ | $f_2$ | $f_3$ |
| 4 | $f_5$ | $f_1$ | $f_2$ | $f_3$ | $f_4$ |

It may be understood that the first condition or the second condition is merely an example, and is not limited. Frequencies of first reference signals sent by the second device every two times may alternatively meet any other possible condition, for example, meet a third condition and a fourth condition. The third condition means that a frequency of a first reference signal sent by an $i$th unit of the second device for an $l$th time is the same as a frequency of a first reference signal sent by an $(i+j)$th unit of the second device for an $(l+j)$th time; and the fourth condition means that a frequency of a first reference signal sent by an $N$th unit of the second device for the $l$th time is the same as a frequency of a first reference signal sent by a 1st unit of the second device for the $(l+j)$th time. The following uses an example for description.

Example 3: If there are five units of the second device, there are five subcarriers that need to be measured in the bandwidth covered by the spectrum shifting amount of the second device and that are $f_1$ to $f_5$ respectively, and if $j$ is 1, a frequency of a second reference signal sent by each unit may be adjusted according to the following Table 2. In this way, the first device may also determine channel parameters of each subchannel on the five subcarriers through five times of measurement.

**Table 2**

| Unit index | 1st time of measurement | 2nd time of measurement | 3rd time of measurement | 4th time of measurement | 5th time of measurement |
|---|---|---|---|---|---|
| 0 | $f_5$ | $f_4$ | $f_3$ | $f_2$ | $f_1$ |
| 1 | $f_1$ | $f_5$ | $f_4$ | $f_3$ | $f_2$ |
| 2 | $f_2$ | $f_1$ | $f_5$ | $f_4$ | $f_3$ |

(continued)

| Unit index | 1st time of measurement | 2nd time of measurement | 3rd time of measurement | 4th time of measurement | 5th time of measurement |
|---|---|---|---|---|---|
| 3 | $f_3$ | $f_2$ | $f_1$ | $f_5$ | $f_4$ |
| 4 | $f_4$ | $f_3$ | $f_2$ | $f_1$ | $f_5$ |

Alternatively, the second device may randomly adjust the spectrum shifting amount of each unit, provided that each unit can send the first reference signal on all frequencies. The following uses an example for description.

Example 4: If there are five units of the second device, and there are five subcarriers that need to be measured in the bandwidth covered by the spectrum shifting amount of the second device and that are $f_1$ to $f_5$ respectively, the second device may randomly determine a spectrum shifting amount of each unit in each time of measurement, as shown in the following Table 3. In this way, the first device may also determine channel parameters of each subchannel on the five subcarriers through five times of measurement.

**Table 3**

| Unit index | 1st time of measurement | 2nd time of measurement | 3rd time of measurement | 4th time of measurement | 5th time of measurement |
|---|---|---|---|---|---|
| 0 | $f_4$ | $f_5$ | $f_3$ | $f_1$ | $f_2$ |
| 1 | $f_5$ | $f_1$ | $f_4$ | $f_2$ | $f_3$ |
| 2 | $f_1$ | $f_2$ | $f_5$ | $f_3$ | $f_4$ |
| 3 | $f_2$ | $f_3$ | $f_1$ | $f_4$ | $f_5$ |
| 4 | $f_3$ | $f_4$ | $f_2$ | $f_5$ | $f_1$ |

Manner b: In-band or out-of-band estimation is performed for implementation.

The first device may estimate, based on a channel parameter of each subchannel determined through one time of measurement on a corresponding frequency (for example, a subcarrier), channel parameters of the subchannel on all frequencies (for example, all subcarriers) in the system operating bandwidth. That is, the channel parameter of the subchannel on the corresponding frequency is extended to all the frequencies of the subchannel in the system operating bandwidth, and it is considered that the channel parameter of the subchannel on the corresponding frequency is the same as or similar to the channel parameters of the subchannel on all the frequencies in the system operating bandwidth. In this way, the channel parameter of each subchannel in the entire system operating bandwidth is determined through one time of measurement. It should be noted that, in current measurement, a frequency of a first reference signal received through each subchannel may be within the system operating bandwidth, or may be outside the system operating bandwidth. For example, the frequency of the first reference signal received through each subchannel is 100 MHz (megahertz) to 120 MHz, and the system operating bandwidth is 10 MHz to 100 MHz. This is not limited in this application.

In conclusion, it can be learned from the method shown in FIG. 2 that because the first reference signal is the reference signal determined by the second device by performing spectrum shifting on the second reference signal, the first reference signal includes only a phase and an amplitude of a channel corresponding to the first reference signal, for example, a G channel or an r/R channel, but does not include a phase and an amplitude of another channel, for example, a channel corresponding to the second reference signal. Therefore, the first device can accurately estimate the G channel or the r/R channel based on the first reference signal, to ensure that other subsequent channels can still be accurately estimated.

Optionally, with reference to the foregoing embodiment, in a first possible design solution, the method provided in this embodiment of this application may further include: Step 1: The first device sends the channel parameter of the first channel to the third device.

The first device is the network device in the RIS-MIMO system, and the third device is the terminal in the RIS-MIMO system. If the third device needs to perform channel estimation on other channels, for example, an r channel and a d channel, by using a downlink pilot, the first device may send the channel parameter of the first channel to the third device, so that the third device can quickly estimate channel parameters of the r channel and the d channel based on the channel parameter of the first channel, to improve channel estimation efficiency. For a specific implementation, refer to the related descriptions in the foregoing "channel estimation in the RIS-MIMO system". Details are not described herein again. Alternatively, the first device is the terminal in the RIS-MIMO system, and the third device is the network device in the RIS-MIMO system. If the third device needs to perform channel estimation on other channels, for example, a G channel and a d channel, by using an uplink pilot, the first device may send the channel parameter of the first channel to the third device, so that the third device can quickly estimate channel parameters of the G channel and the d channel based on the channel parameter of the first channel, to improve channel estimation efficiency. For a specific implementation, refer to the related descriptions in the foregoing "channel estimation in the RIS-MIMO system". Details are not described herein again.

Optionally, with reference to the foregoing embodiment, in a second possible design solution, the method provided in this embodiment of this application may further include: Step 2: The first device sends configuration information to the second device. Correspondingly, the second device receives the configuration information from the first device.

The configuration information indicates the second device to perform spectrum shifting on the second reference signal, for example, indicate a spectrum shifting amount of each unit of the second device. In an implementation, for each time of measurement, the first device may send configuration information corresponding to current measurement to the second device, so that the second device can perform spectrum shifting on the second reference signal in the measurement process based on the configuration information corresponding to the current measurement. Alternatively, the first device may send configuration information to the second device once, where the configuration information is applicable to all measurement. In this way, the second device can perform spectrum shifting on the second reference signal based on the configuration information in each measurement process.

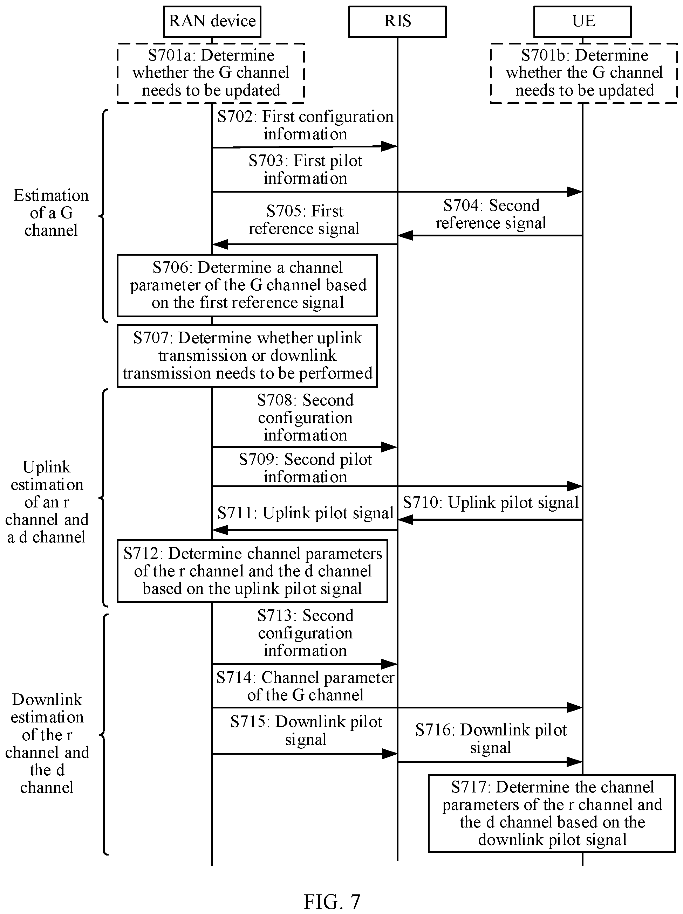

The foregoing describes the overall flowchart of the communication method provided in this embodiment of this application with reference to FIG. 2. The following describes in detail a flowchart of the communication method shown in FIG. 2 in a specific application scenario with reference to FIG. 7 to FIG. 9.

For example, FIG. 7 is a schematic flowchart 2 of a communication method according to an embodiment of this application. The communication method is applicable to communication among a UE, a RAN device (the foregoing first device), and a RIS (the foregoing second device) in a scenario in which a G channel is a slow-varying channel and an r channel is a fast-varying channel. As shown in FIG. 7, the communication method may include the following steps.

S701a: The RAN device determines whether the G channel needs to be updated.

The RAN device may determine whether an uplink bit error rate of one or more UEs is greater than a threshold within a current periodicity, for example, within 10 milliseconds, 100 milliseconds, or a time periodicity predefined by a system. If the uplink bit error rate is greater than the threshold, it indicates that the G channel changes greatly, and channel estimation needs to be performed on the G channel again, that is, the G channel needs to be updated. Therefore, the following S702 to S706 may be performed. Alternatively, if the uplink bit error rate is less than or equal to the threshold, it indicates that the G channel does not change greatly, and channel estimation does not need to be performed on the G channel again. Therefore, the following S707 to S712, or the following S707 and S713 to S717 may be performed.

S701b: The UE determines whether the G channel needs to be updated.

The UE may determine whether a bit error rate, of the UE, for receiving downlink data is greater than a threshold within a current periodicity, for example, within 10 milliseconds, 100 milliseconds, or a time periodicity predefined by a system. If the downlink bit error rate is greater than the threshold, it indicates that the G channel changes greatly, and channel estimation needs to be performed on the G channel again, that is, the G channel needs to be updated. Therefore, the UE may send indication information to the RAN device, to indicate that the G channel needs to be updated, so that the following S702 to S706 are performed. Alternatively, if the downlink bit error rate is less than or equal to the threshold, it indicates that the G channel does not change greatly, and channel estimation does not need to be performed on the G channel again. Therefore, the UE may send indication information to the RAN device, to indicate that the G channel does not need to be updated, so that the following S707 to S712, or the following S707 and S713 to S717 are performed.

In addition, S701a and S701b are optional steps. For example, if the RAN device has previously performed channel estimation on the G channel, S701a and S701b are performed to determine whether the G channel needs to be updated. However, if the RAN device has not previously performed channel estimation on the G channel, that is, current estimation is a first time of channel estimation performed on the G channel, S702 to S706 may be performed by default.

S702: The RAN device sends first configuration information to the RIS. Correspondingly, the RIS receives the first configuration information from the RAN device.

The first configuration information indicates the RIS to perform spectrum shifting on a received reference signal. For a specific implementation, refer to the related descriptions in the second possible design solution. Details are not described herein again.

S703: The RAN device sends first pilot information to the UE. Correspondingly, the UE receives the first pilot information from the RAN device.

The first pilot information indicates a related parameter of the second reference signal, for example, sending time, a frequency, a phase, and an amplitude, so that the UE may send the second reference signal based on the first pilot information.

S704: The UE sends a second reference signal. Correspondingly, the RIS receives the second reference signal.

S705: The RIS sends a first reference signal. Correspondingly, the RAN device receives the first reference signal.

S706: The RAN device determines a channel parameter of the G channel based on the first reference signal.

For a specific implementation of S704 to S706, refer to the related descriptions in the foregoing S201 to S203. Details are not described herein again.

S707: The RAN device determines whether uplink transmission or downlink transmission needs to be performed.

The RAN device may determine, based on a transmission direction in the current periodicity or in any other possible manner, whether communication between the RAN device and the UE is uplink transmission or downlink transmission. If the RAN device determines that communication between the RAN device and the UE is uplink transmission, the following S708 to S712 may be performed, that is, the UE initiates measurement. Alternatively, if the RAN device determines that communication between the RAN device and the UE is downlink transmission, the following S713 to S717 may be performed, that is, the RAN device initiates measurement. In addition, an execution sequence of S707 and S702 to S706 is not limited.

S708: The RAN device sends second configuration information to the RIS. Correspondingly, the RIS receives the second configuration information from the RAN device.

The second configuration information may be the same as the first configuration information. Details are not described again. Alternatively, the second configuration information may be different from the first configuration information. For example, the second configuration information indicates a reflection function of the RIS, for example, indicates each unit of the RIS to reflect a received signal in a specified direction.

S709: The RAN device sends second pilot information to the UE. Correspondingly, the UE receives the second pilot information from the RAN device.

The second pilot information indicates a related parameter of an uplink pilot signal, for example, sending time, a frequency, a phase, and an amplitude, so that the UE may send the uplink pilot signal based on the second pilot information. The uplink pilot signal is used for channel estimation on the r channel and a d channel.

S710: The UE sends an uplink pilot signal. Correspondingly, the RIS receives the uplink pilot signal.

S711: The RIS sends the uplink pilot signal. Correspondingly, the RAN device receives the uplink pilot signal.

When receiving the uplink pilot signal, the RIS may reflect the uplink pilot signal in a specified direction (for example, a direction of the RAN device) based on the second configuration information, that is, send the uplink pilot signal.

S712: The RAN device determines channel parameters of the r channel and the d channel based on the uplink pilot signal.

The RAN device may determine the channel parameters of the r channel and the d channel based on the uplink pilot signal and the channel parameter of the G channel, to implement channel estimation on the r channel and the d channel. For a specific implementation, refer to the related descriptions in channel estimation of the RIS-MIMO system. Details are not described again.

S713: The RAN device sends third configuration information to the RIS. Correspondingly, the RIS receives the third configuration information from the RAN device.

For a specific implementation of the third configuration information, refer to the related descriptions of the second configuration information. Details are not described herein again.

S714: The RAN device sends the channel parameter of the G channel to the UE. Correspondingly, the UE receives the channel parameter of the G channel from the RAN device.

For a specific implementation of S714, refer to the related descriptions in the first possible design solution. Details are not described herein again. In addition, S714 is an optional step. For example, if the RAN device has sent a latest channel parameter of the G channel to the UE, S714 does not need to be performed; otherwise, S714 may be performed. In addition, an execution sequence of S713 and S714 is not limited.

S715: The RAN device sends a downlink pilot signal. Correspondingly, the RIS receives the downlink pilot signal.

S716: The RIS sends the downlink pilot signal. Correspondingly, the UE receives the downlink pilot signal.

When receiving the downlink pilot signal, the RIS may reflect the downlink pilot signal in a specified direction (for example, a direction of the UE) based on the third configuration information, that is, send the downlink pilot signal.

S717: The UE determines channel parameters of the r channel and a d channel based on the downlink pilot signal.

The UE may determine the channel parameters of the r channel and the d channel based on the downlink pilot signal and the channel parameter of the G channel, to implement channel estimation on the r channel and the d channel. For a specific implementation, refer to the related descriptions in channel estimation of the RIS-MIMO system. Details are not described again.

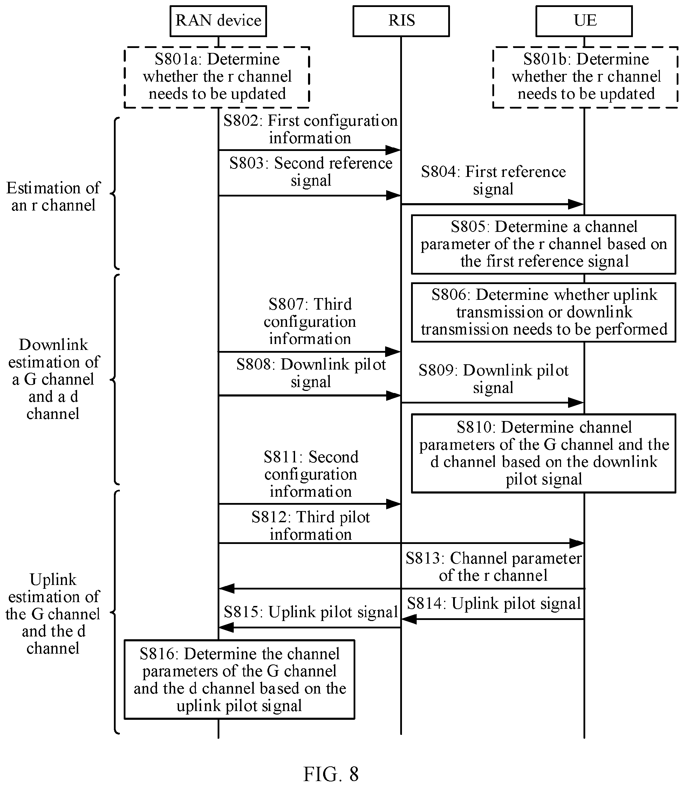

For example, FIG. 8 is a schematic flowchart 3 of a communication method according to an embodiment of this application. The communication method is applicable to communication among a UE (the foregoing first device), a RAN device, and a RIS (the foregoing second device) in a scenario in which an r channel is a slow-varying channel and a G channel is a fast-varying channel. As shown in FIG. 8, the communication method may include the following steps.

S801a: The RAN device determines whether the r channel needs to be updated.

The RAN device may determine whether an uplink bit error rate of one or more UEs is greater than a threshold within a current periodicity, for example, within 10 milliseconds, 100 milliseconds, or a time periodicity predefined by a system. If the uplink bit error rate is greater than the threshold, it indicates that the r channel changes greatly, and channel estimation needs to be performed on the r channel again, that is, the r channel needs to be updated. Therefore, the RAN device may send indication information to the UE, to indicate that the r channel needs to be updated, so that the following S802 to S805 are performed. Alternatively, if the uplink bit error rate is less than or equal to the threshold, it indicates that the r channel does not change greatly, and channel estimation does not need to be performed on the r channel again. Therefore, the RAN device may send indication information to the UE, to indicate that the r channel does not need to be updated, so that the following S806 to S810, or the following S806 and S811 to S816 are performed.

S801b: The UE determines whether the r channel needs to be updated.

The UE may determine whether a bit error rate, of the UE, for receiving downlink data is greater than a threshold within a current periodicity, for example, within 10 milliseconds, 100 milliseconds, or a time periodicity predefined by a system. If the downlink bit error rate is greater than the threshold, it indicates that the r channel changes greatly, and channel estimation needs to be performed on the r channel again, that is, the r channel needs to be updated. Therefore, the following S802 to S805 may be performed. Alternatively, if the downlink bit error rate is less than or equal to the threshold, it indicates that the r channel does not change greatly, and channel estimation does not need to be performed on the r channel again. Therefore, the following S806 to S810, or the following S806 and S811 to S816 may be performed.

In addition, S801a and S801b are optional steps. For example, if the UE has previously performed channel estimation on the r channel, S708a and S801b are performed to determine whether the r channel needs to be updated. However, if the UE has not previously performed channel estimation on the r channel, that is, current estimation is a first time of channel estimation performed on the r channel, S802 to S805 may be performed by default.

S802: The RAN device sends first configuration information to the RIS. Correspondingly, the RIS receives the first configuration information from the RAN device.

The first configuration information indicates the RIS to perform spectrum shifting on a received reference signal. For a specific implementation, refer to the related descriptions in the second possible design solution. Details are not described herein again.

S803: The RAN device sends a second reference signal. Correspondingly, the RIS receives the second reference signal.

S804: The RIS sends a first reference signal. Correspondingly, the UE receives the first reference signal.

S805: The UE determines a channel parameter of the r channel based on the first reference signal.

For a specific implementation of S803 to S805, refer to the related descriptions in the foregoing S201 to S203. Details are not described herein again.

S806: The UE determines whether uplink transmission or downlink transmission needs to be performed.

For a specific implementation of S806, refer to the related descriptions in the foregoing S707. Details are not described herein again. If the UE determines that downlink transmission needs to be performed, the following S807 to S810 may be performed, that is, the RAN device continues to initiate measurement. Alternatively, if the UE determines that uplink transmission needs to be performed, the following S811 to S816 may be performed, that is, the UE initiates measurement.

S807: The RAN device sends third configuration information to the RIS. Correspondingly, the RIS receives the third configuration information from the RAN device.

For a specific implementation of S807, refer to the related descriptions in the foregoing S708. Details are not described herein again.

S808: The RAN device sends a downlink pilot signal. Correspondingly, the RIS receives the downlink pilot signal.

S809: The RIS sends the downlink pilot signal. Correspondingly, the UE receives the downlink pilot signal.

When receiving the downlink pilot signal, the RIS may reflect the downlink pilot signal in a specified direction (for example, a direction of the UE) based on the third configuration information, that is, send the downlink pilot signal.

S810: The UE determines channel parameters of the G channel and a d channel based on the downlink pilot signal.

The RAN device may determine the channel parameters of the G channel and the d channel based on the downlink pilot signal and the channel parameter of the r channel, to implement channel estimation on the G channel and the d channel. For a specific implementation, refer to the related descriptions in channel estimation of the RIS-MIMO system. Details are not described again.

S811: The RAN device sends second configuration information to the RIS. Correspondingly, the RIS receives the second configuration information from the RAN device.

For a specific implementation of S811, refer to the related descriptions in the foregoing S708. Details are not described herein again.

S812: The RAN device sends third pilot information to the UE. Correspondingly, the UE receives the third pilot information from the RAN device.

The third pilot information indicates a related parameter of an uplink pilot signal, for example, sending time, a frequency, a phase, and an amplitude, so that the UE may send the uplink pilot signal based on the third pilot information. The uplink pilot signal is used for channel estimation on the G channel and a d channel.

S813: The UE sends the channel parameter of the r channel to the RAN device. Correspondingly, the RAN device receives the channel parameter of the r channel from the UE.

For a specific implementation of S812, refer to the related descriptions in the first possible design solution. Details are not described herein again. In addition, S812 is an optional step. For example, if the UE has sent a latest channel parameter of the r channel to the RAN device, S812 does not need to be performed; otherwise, S812 may be performed. In addition, an execution sequence of S811 to S813 is not limited.

S814: The UE sends an uplink pilot signal. Correspondingly, the RIS receives the uplink pilot signal.

S815: The RIS sends the uplink pilot signal. Correspondingly, the RAN device receives the uplink pilot signal.

When receiving the uplink pilot signal, the RIS may reflect the uplink pilot signal in a specified direction (for example, a direction of the RAN device) based on the second configuration information, that is, send the uplink pilot signal.

S816: The RAN device determines channel parameters of the G channel and the d channel based on the uplink pilot signal.

The RAN device may determine the channel parameters of the G channel and the d channel based on the uplink pilot signal and the channel parameter of the r channel, to implement channel estimation on the G channel and the d channel. For a specific implementation, refer to the related descriptions in channel estimation of the RIS-MIMO system. Details are not described again.

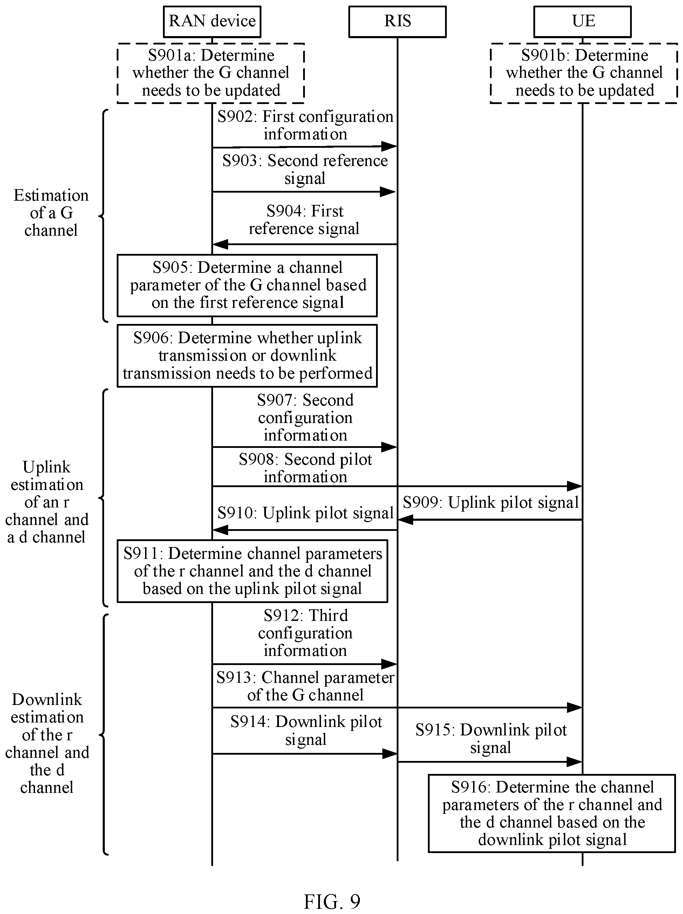

For example, FIG. 9 is a schematic flowchart 4 of a communication method according to an embodiment of this application. The communication method is applicable to communication among a UE, a RAN device (the foregoing first device), and a RIS (the foregoing second device) in a scenario in which a G channel is a slow-varying channel and an r channel is a fast-varying channel. As shown in FIG. 9, the communication method may include the following steps.

S901a: The RAN device determines whether the G channel needs to be updated.

The RAN device may determine whether an uplink bit error rate of one or more UEs is greater than a threshold within a current periodicity, for example, within 10 milliseconds, 100 milliseconds, or a time periodicity predefined by a system. If the uplink bit error rate is greater than the threshold, it indicates that the G channel changes greatly, and channel estimation needs to be performed on the G channel again, that is, the G channel needs to be updated. Therefore, the following S902 to S905 may be performed. Alternatively, if the uplink bit error rate is less than or equal to the threshold, it indicates that the G channel does not change greatly, and channel estimation does not need to be performed on the G channel again. Therefore, the following S906 to S911, or the following S906 and S912 to S916 may be performed.

S901b: The UE determines whether the G channel needs to be updated.

The UE may determine whether a bit error rate, of the UE, for receiving downlink data is greater than a threshold within a current periodicity, for example, within 10 milliseconds, 100 milliseconds, or a time periodicity predefined by a system. If the downlink bit error rate is greater than the threshold, it indicates that the G channel changes greatly, and channel estimation needs to be performed on the G channel again, that is, the G channel needs to be updated. Therefore, the UE may send indication information to the RAN device, to indicate that the G channel needs to be updated, so that the following S902 to S905 are performed. Alternatively, if the downlink bit error rate is less than or equal to the threshold, it indicates that the G channel does not change greatly, and channel estimation does not need to be performed on the G channel again. Therefore, the UE may send indication information to the RAN device, to indicate that the G channel does not need to be updated, so that the following S906 to S911, or the following S906 and S912 to S916 are performed.

In addition, S901a and S901b are optional steps. For example, if the RAN device has previously performed channel estimation on the G channel, S901a and S901b are performed to determine whether the G channel needs to be updated. However, if the RAN device has not previously performed channel estimation on the G channel, that is, current estimation is a first time of channel estimation performed on the G channel, S902 to S905 may be performed by default.

S902: The RAN device sends first configuration information to the RIS. Correspondingly, the RIS receives the first configuration information from the RAN device.

The first configuration information indicates the RIS to perform spectrum shifting on a received reference signal. For a specific implementation, refer to the related descriptions in the second possible design solution. Details are not described herein again.

S903: The RAN device sends a second reference signal. Correspondingly, the RIS receives the second reference signal.

S904: The RIS sends a first reference signal. Correspondingly, the RAN device receives the first reference signal.

S905: The RAN device determines a channel parameter of the G channel based on the first reference signal.

In this case, an implementation of S903 to S905 may be: An antenna 1 of the RAN device sends a second reference signal (denoted as a second reference signal a), and an antenna 2 of the RAN device receives a first reference signal (denoted as a first reference signal a). Then, the antenna 2 of the RAN device sends a second reference signal (denoted as a second reference signal b), and the antenna 1 of the RAN device receives a first reference signal (denoted as a first reference signal b). In this way, the RAN device may determine a channel parameter of a channel (denoted as a channel 1) between the antenna 2 and the RIS based on the first reference signal a, and determine a channel parameter of a channel (denoted as a channel 2) between the antenna 1 and the RIS based on the first reference signal b. The channel 1 and the channel 2 form a complete G channel, and determining the channel parameters of the channel 1 and the channel 2 is determining the channel parameter of the G channel, to implement comprehensive channel estimation. Certainly, the foregoing implementation is merely an example, and is not limited. For example, when all antennas of the RAN device send second reference signals, all the antennas of the RAN device receive first reference signals. In addition, for a specific implementation of channel estimation, refer to the related descriptions in the foregoing S201 to S203. Details are not described herein again.

S906: The RAN device determines whether uplink transmission or downlink transmission needs to be performed.

The RAN device may determine, based on a transmission direction in the current periodicity or in any other possible manner, whether communication between the RAN device and the UE is uplink transmission or downlink transmission. If the RAN device determines that communication between the RAN device and the UE is uplink transmission, the following S907 to S911 may be performed, that is, the UE initiates measurement. Alternatively, if the RAN device determines that communication between the RAN device and the UE is downlink transmission, the following S912 to S916 may be performed, that is, the RAN device initiates measurement. In addition, an execution sequence of S906 and S902 to S905 is not limited.

S907: The RAN device sends second configuration information to the RIS. Correspondingly, the RIS receives the second configuration information from the RAN device.

S908: The RAN device sends second pilot information to the UE. Correspondingly, the UE receives the second pilot information from the RAN device.

For a specific implementation of S907 and S908, refer to the related descriptions in the foregoing S708 and S709. Details are not described herein again.

S909: The UE sends an uplink pilot signal. Correspondingly, the RIS receives the uplink pilot signal.

S910: The RIS sends the uplink pilot signal. Correspondingly, the RAN device receives the uplink pilot signal.

S911: The RAN device determines channel parameters of the r channel and a d channel based on the uplink pilot signal.

The RAN device may determine the channel parameters of the r channel and the d channel based on the uplink pilot signal and the channel parameter of the G channel, to implement channel estimation on the r channel and the d channel. For a specific implementation, refer to the related descriptions in channel estimation of the RIS-MIMO system. Details are not described again.

S912: The RAN device sends third configuration information to the RIS. Correspondingly, the RIS receives the third configuration information from the RAN device.

For a specific implementation of the third configuration information, refer to the related descriptions of the second configuration information. Details are not described herein again.

S913: The RAN device sends the channel parameter of the G channel to the UE. Correspondingly, the UE receives the channel parameter of the G channel from the RAN device.

For a specific implementation of S913, refer to the related descriptions in the first possible design solution. Details are not described herein again. In addition, S913 is an optional step. For example, if the RAN device has sent a latest channel parameter of the G channel to the UE, S913 does not need to be performed; otherwise, S913 may be performed. In addition, an execution sequence of S912 and S913 is not limited.

S914: The RAN device sends a downlink pilot signal. Correspondingly, the RIS receives the downlink pilot signal.

S915: The RIS sends the downlink pilot signal. Correspondingly, the UE receives the downlink pilot signal.

S916: The UE determines channel parameters of the r channel and a d channel based on the downlink pilot signal.

The UE may determine the channel parameters of the r channel and the d channel based on the uplink pilot signal and the channel parameter of the G channel, to implement channel estimation on the r channel and the d channel. For a specific implementation, refer to the related descriptions in channel estimation of the RIS-MIMO system. Details are not described again.

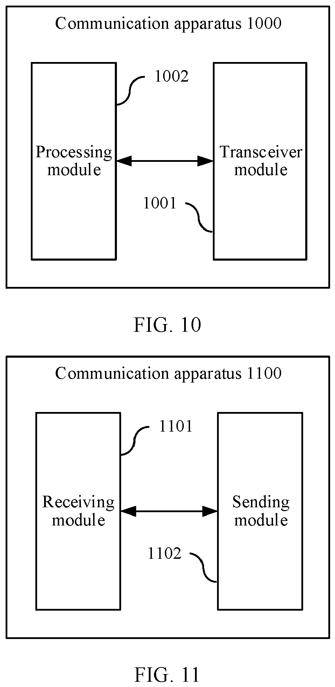

The communication methods provided in embodiments of this application are described in detail above with reference to FIG. 2 to FIG. 9. Communication apparatuses configured to perform the communication methods provided in embodiments of this application are described in detail below with reference to FIG. 10 to FIG. 13.

For example, FIG. 10 is a schematic diagram 1 of a structure of a communication apparatus according to an embodiment of this application. The communication apparatus 1000 may be used in the RIS-MIMO system shown in FIG. 1, and execute a function of the first device in the method shown in FIG. 2, or execute a function of the RAN device in the method shown in FIG. 7 or FIG. 9, or execute a function of the UE in the method shown in FIG. 8. As shown in FIG. 10, the communication apparatus 1000 includes a transceiver module 1001 and a processing module 1002. For ease of description, FIG. 10 shows only main components of the communication apparatus 1000.

The transceiver module 1001 is configured to receive a first reference signal; and the processing module 1002 is configured to perform channel estimation based on the first reference signal. The first reference signal is a reference signal determined by a second device by performing spectrum shifting on a second reference signal, and a frequency of the first reference signal is different from a frequency of the second reference signal.

In a possible design solution, there are a plurality of first reference signals, and frequencies of the plurality of first reference signals are different.

Optionally, frequencies of any two first reference signals are spaced by at least one subcarrier.

Optionally, the transceiver module 1001 is further configured to simultaneously receive the plurality of first reference signals, or receive the plurality of first reference signals in a time-sharing manner.

Further, the transceiver module 1001 receives the plurality of first reference signals in the time-sharing manner; the second device includes $N$ units, where $N$ is an integer greater than 1; and frequencies of first reference signals received by the transceiver module 1001 every two times meet a first condition or a second condition, where the first condition means that a frequency of a first reference signal that is received by the transceiver module 1001 for an $(l+j)^{th}$ time and that is from an $i^{th}$ unit of the second device is the same as a frequency of a first reference signal that is received by the transceiver module 1001 for an $l^{th}$ time and that is from an $(i+j)^{th}$ unit of the second device, and the second condition means that a frequency of a first reference signal that is received by the transceiver module 1001 for the $(l+j)^{th}$ time and that is from an $N^{th}$ unit of the second device is the same as a frequency of a first reference signal that is received by the transceiver module 1001 for the $l^{th}$ time and that is from a $1^{st}$ unit of the second device, where $l$ is a positive integer, $j$ is a positive integer, and $i$ is an integer ranging from 1 to $N-j$.

In a possible design solution, the transceiver module 1001 is further configured to send the second reference signal before receiving the first reference signal.

Optionally, there are a plurality of second reference signals, and frequencies of the plurality of second reference signals are different.

Further, a frequency domain spacing between any two of the plurality of second reference signals is less than a system operating bandwidth, a frequency of one of the any two second reference signals is a third value, a frequency of the other one of the any two second reference signals is a fourth value, a spectrum shifting amount of the second device for the second reference signal is a fifth value, and a sum of a positive integer multiple of the fifth value and the fourth value is the same as the third value.

In a possible design solution, the transceiver module 1001 is further configured to simultaneously send the plurality of second reference signals, or send the plurality of second reference signals in a time-sharing manner.

In a possible design solution, a frequency spacing between the first reference signal and the second reference signal covers the system operating bandwidth.

In a possible design solution, the processing module 1001 is further configured to determine a channel parameter of a first channel based on the first reference signal. The communication apparatus 1000 includes $M$ receive antennas, the second device includes the $N$ units, where $M$ and $N$ are integers greater than 1, the first channel includes $M*N$ subchannels, the channel parameter of the first channel includes a channel parameter of each of the $M*N$ subchannels, and the channel parameter of each subchannel includes a channel parameter of the subchannel on each subcarrier in the system operating bandwidth.

Optionally, the transceiver module 1001 is further configured to send the channel parameter of the first channel to a third device.

In a possible design solution, the transceiver module 1001 is further configured to send configuration information to the second device before receiving the first reference signal. The configuration information indicates the second device to perform spectrum shifting on the second reference signal.

Optionally, the transceiver module 1001 may alternatively include a sending module and a receiving module (not shown in FIG. 10). The sending module is configured to implement a sending function of the communication apparatus 1000, and the receiving module is configured to implement a receiving function of the communication apparatus 1000.

Optionally, the communication apparatus 1000 may further include a storage module (not shown in FIG. 10). The storage module stores a program or instructions. When the processing module executes the program or the instructions, the communication apparatus 1000 is enabled to execute a function of the first device in the method shown in FIG. 2, or execute a function of the RAN device in the method shown in FIG. 7 or FIG. 9, or execute a function of the UE in the method shown in FIG. 8.

It should be understood that the processing module in the communication apparatus 1000 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1000 may be a terminal or a network device, or may be a chip (system) or another component or assembly that may be disposed in a terminal or a network device, or may be an apparatus including a terminal or a network device. This is not limited in this application.

In addition, for a technical effect of the communication apparatus 1000, refer to the corresponding technical effect in the method shown in FIG. 2. Details are not described herein again.

For example, FIG. 11 is a schematic diagram 2 of a structure of a communication apparatus according to an embodiment of this application. The communication apparatus 1100 may be used in the RIS-MIMO system shown in FIG. 1, to execute a function of the second device in the method shown in FIG. 2, or execute a function of the RIS in the methods shown in FIG. 7 to FIG. 9. As shown in FIG. 11, the communication apparatus 1100 includes a receiving module 1101 and a sending module 1102. For ease of description, FIG. 11 shows only main components of the communication apparatus 1000.

The receiving module 1101 is configured to obtain a second reference signal; and the sending module 1102 is configured to send a first reference signal. The first reference signal is a reference signal determined by the communication apparatus 1100 by performing spectrum shifting on the second reference signal, a frequency of the first reference signal is different from a frequency of the second reference signal, and the first reference signal is used for channel estimation.

In a possible design solution, there are a plurality of first reference signals, and frequencies of the plurality of first reference signals are different.

Optionally, frequencies of any two first reference signals are spaced by at least one subcarrier.

Optionally, the sending module 1102 is further configured to simultaneously send the plurality of first reference signals, or send the plurality of first reference signals in a time-sharing manner.

Further, the sending module 1102 sends the plurality of first reference signals in the time-sharing manner; the sending module 1102 includes $N$ units, where $N$ is an integer greater than 1; and frequencies of first reference signals sent by the sending module 1102 every two times meet a first condition or a second condition, where the first condition means that a frequency of a first reference signal sent by an $i^{th}$ unit of the sending module 1102 for an $(l+j)^{th}$ time is the same as a frequency of a first reference signal sent by an $(i+j)^{th}$ unit of the sending module 1102 for an $l^{th}$ time, and the second condition means that a frequency of a first reference signal sent by an $N^{th}$ unit of the sending module 1102 for the $(l+j)^{th}$ time is the same as a frequency of a first reference signal sent by a $1^{st}$ unit of the sending module 1102 for the $l^{th}$ time, where $l$ is a positive integer, $j$ is a positive integer, and i is an integer ranging from 1 to $N-j$.

In a possible design solution, there are a plurality of second reference signals, and each of the second reference signals is used by the communication apparatus 1100 to determine one corresponding first reference signal.

In another possible design solution, there are a plurality of second reference signals, and each of the second reference signals is used by the communication apparatus 1100 to determine a plurality of corresponding first reference signals.

Optionally, one of any two second reference signals is used by the communication apparatus 1100 to determine S first reference signals, the other one of the any two second reference signals is used by the communication apparatus 1100 to determine T first reference signals, and frequencies of the S first reference signals are different from frequencies of the T first reference signals, where S and T are integers greater than 1.

Further, a spectrum shifting amount of the communication apparatus 1100 for the other one of the any two second reference signals is a first value, a frequency spacing between a maximum harmonic frequency and a minimum harmonic frequency of the S first reference signals is a second value, and twice the first value is greater than or equal to a positive integer multiple of the second value.

In a possible design solution, there are a plurality of second reference signals, and frequencies of the plurality of second reference signals are different.

Optionally, a frequency domain spacing between any two of the plurality of second reference signals is less than a system operating bandwidth, a frequency of one of the any two second reference signals is a third value, a frequency of the other one of the any two second reference signals is a fourth value, a spectrum shifting amount of the communication apparatus 1100 for the second reference signal is a fifth value, and a sum of a positive integer multiple of the fifth value and the fourth value is the same as the third value.

In a possible design solution, the receiving module 1101 is further configured to simultaneously receive the plurality of second reference signals, or receive the plurality of second reference signals in a time-sharing manner.

In a possible design solution, a frequency spacing between the first reference signal and the second reference signal covers the system operating bandwidth.

In a possible design solution, the receiving module 1101 is further configured to receive configuration information from a first device before the sending module 1102 sends the first reference signal, where the configuration information indicates the communication apparatus 1100 to perform spectrum shifting on the second reference signal.

Optionally, the sending module 1102 and the receiving module 1101 may alternatively be integrated into one module, for example, a transceiver module (not shown in FIG. 11). The transceiver module is configured to implement a sending function and a receiving function of the communication apparatus 1100.

Optionally, the communication apparatus 1100 may further include a processing module (not shown in FIG. 11). The processing module is configured to implement a processing function of the communication apparatus 1100.

Optionally, the communication apparatus 1100 may further include a storage module (not shown in FIG. 11). The storage module stores a program or instructions. When the processing module executes the program or the instructions, the communication apparatus 1100 is enabled to execute a function of the second device in the method shown in FIG. 2, or execute a function of the RIS in the methods shown in FIG. 7 to FIG. 9.

It should be understood that the processing module in the communication apparatus 1100 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1100 may be a terminal or a network device, or may be a chip (system) or another component or assembly that may be disposed in a terminal or a network device, or may be an apparatus including a terminal or a network device. This is not limited in this application.

In addition, for a technical effect of the communication apparatus 1100, refer to the corresponding technical effect in the method shown in FIG. 2. Details are not described herein again.

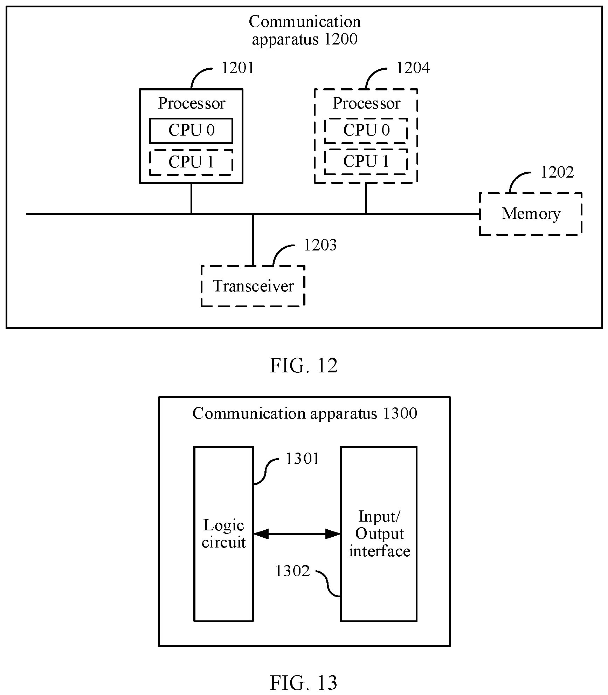

For example, FIG. 12 is a schematic diagram 3 of a structure of a communication apparatus according to an embodiment of this application. The communication apparatus may be a terminal device or a network device, or may be a chip (system) or another component or assembly that may be disposed in a terminal device or a network device. As shown in FIG. 12, the communication apparatus 1200 may include a processor 1201. Optionally, the communication apparatus 1200 may further include a memory 1202 and/or a transceiver 1203. The processor 1201 is coupled to the memory 1202 and the transceiver 1203, for example, may be connected to the memory 1202 and the transceiver 1203 through a communication bus.

The following describes in detail each component of the communication apparatus 1200 with reference to FIG. 12.

The processor 1201 is a control center of the communication apparatus 1200, and may be a processor, may be a collective name of a plurality of processing elements, or may be referred to as a logic circuit. For example, the processor 1201 is one or more central processing units (central processing units, CPUs), may be an application specific integrated circuit (application specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1201 may perform various functions of the communication apparatus 1200 by running or executing a software program stored in the memory 1202 and invoking data stored in the memory 1202.

During specific implementation, in an embodiment, the processor 1201 may include one or more CPUs, for example, a CPU 0 and a CPU 1 shown in FIG. 12.

During specific implementation, in an embodiment, the communication apparatus 1200 may alternatively include a plurality of processors, for example, the processor 1201 and a processor 1204 shown in FIG. 2. Each of the processors may be a single-CPU (single-CPU) processor or may be a multi-CPU (multi-CPU) processor. The processor herein may be one or more devices, circuits, and/or processing cores configured to process data (for example, computer program instructions).

The memory 1202 is configured to store a software program for performing the solutions of this application, and is controlled by the processor 1201, so that the method shown in FIG. 2 or the method shown in FIG. 7 to FIG. 12 is performed.

Optionally, the memory 1202 may be a read-only memory (read-only memory, ROM) or another type of static storage device that can store static information and instructions, or a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 1202 may be integrated with the processor 1201, or may exist independently, and is coupled to the processor 1201 through an interface circuit or an input/output interface (not shown in FIG. 12) of the communication apparatus 1200. This is not specifically limited in this embodiment of this application.

The transceiver 1203 is configured for communication with another communication apparatus. For example, the communication apparatus 1200 is a terminal, and the transceiver 1203 may be configured to communicate with a network device or communicate with another terminal device. For another example, the communication apparatus 1200 is a network device, and the transceiver 1203 may be configured to communicate with a terminal or communicate with another network device.

Optionally, the transceiver 1203 may include a receiver and a transmitter (not separately shown in FIG. 12). The receiver is configured to implement a receiving function, and the transmitter is configured to implement a sending function.

Optionally, the transceiver 1203 may be integrated with the processor 1201, or may exist independently, and is coupled to the processor 1201 through an interface circuit (not shown in FIG. 12) of the communication apparatus 1200. This is not specifically limited in this embodiment of this application.

It should be noted that the structure of the communication apparatus 1200 shown in FIG. 12 does not constitute a limitation on the communication apparatus. An actual communication apparatus may include more or fewer components than those shown in the figure, combine some components, or have different component arrangements.

In addition, for a technical effect of the communication apparatus 1200, refer to the technical effects of the communication methods in the foregoing method embodiments. Details are not described herein again.

For example, FIG. 13 is a schematic diagram 4 of a structure of a communication apparatus according to an embodiment of this application. The communication apparatus may be a terminal device or a network device, or may be a chip (system) or another component or assembly that may be disposed in a terminal device or a network device. As shown in FIG. 13, the communication apparatus 1300 may include: a logic circuit 1301 and an input/output interface 1302. The input/output interface 1302 is configured to receive code instructions and transmit the code instructions to the logic circuit 1301. The logic circuit 1301 is configured to run the code instructions to perform the methods as described above.

In addition, for a technical effect of the communication apparatus 1300, refer to the technical effects of the communication methods in the foregoing method embodiments. Details are not described herein again.

An embodiment of this application provides a communications system. The communication system includes the foregoing one or more terminals and one or more network devices.

It should be understood that in this embodiment of this application, the processor may be a CPU, or the processor may be another general purpose processor, a DSP, an ASIC, a field programmable gate array FPGA or another programmable logic device, a discrete gate or a transistor logic device, a discrete hardware component, or the like. The general purpose processor may be a microprocessor, or the processor may be any conventional processor or the like.

It may be understood that in this embodiment of this application, the memory may be a volatile memory or a nonvolatile memory, or may include a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. By way of example rather than limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs or instructions are loaded and executed on a computer, the process or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

   receiving, by a first device, a first reference signal, wherein the first reference signal is a reference signal determined by a second device by performing spectrum shifting on a second reference signal, and a frequency of the first reference signal is different from a frequency of the second reference signal; and
   performing, by the first device, channel estimation based on the first reference signal.

2. The method according to claim 1, wherein there are a plurality of first reference signals, and frequencies of the plurality of first reference signals are different.

3. The method according to claim 2, wherein frequencies of any two of the first reference signals are spaced by at least one subcarrier.

4.  The method according to claim 2 or 3, wherein the receiving, by a first device, a first reference signal comprises: simultaneously receiving, by the first device, the plurality of first reference signals, or receiving, by the first device, the plurality of first reference signals in a time-sharing manner.

5.  The method according to claim 4, wherein the first device receives the plurality of first reference signals in the time-sharing manner; the second device comprises $N$ units, wherein $N$ is an integer greater than 1; and frequencies of first reference signals received by the first device every two times meet a first condition or a second condition, wherein the first condition means that a frequency of a first reference signal that is received by the first device for an $(l+j)^{th}$ time and that is from an $i^{th}$ unit of the second device is the same as a frequency of a first reference signal that is received by the first device for an $l^{th}$ time and that is from an $(i+j)^{th}$ unit of the second device, and the second condition means that a frequency of a first reference signal that is received by the first device for the $(l+j)^{th}$ time and that is from an $N^{th}$ unit of the second device is the same as a frequency of a first reference signal that is received by the first device for the $l^{th}$ time and that is from a $1^{st}$ unit of the second device, wherein $l$ is a positive integer, $j$ is a positive integer, and i is an integer ranging from 1 to $N-j$.

6.  The method according to any one of claims 1 to 5, wherein before the receiving, by a first device, a first reference signal, the method further comprises:
    sending, by the first device, the second reference signal.

7.  The method according to any one of claims 1 to 6, wherein there are a plurality of second reference signals, and each of the second reference signals is used by the second device to determine one corresponding first reference signal.

8.  The method according to any one of claims 1 to 7, wherein there are a plurality of second reference signals, and each of the second reference signals is used by the second device to determine a plurality of corresponding first reference signals.

9.  The method according to claim 8, wherein one of any two of the second reference signals is used by the second device to determine S first reference signals, the other one of the any two of the second reference signals is used by the second device to determine T first reference signals, and frequencies of the S first reference signals are different from frequencies of the T first reference signals, wherein S and T are integers greater than 1.

10. The method according to any one of claims 1 to 6, wherein there are a plurality of second reference signals, and frequencies of the plurality of second reference signals are different.

11. The method according to any one of claims 1 to 10, wherein a frequency spacing between the first reference signal and the second reference signal covers a system operating bandwidth.

12. The method according to any one of claims 1 to 11, wherein the performing, by the first device, channel estimation based on the first reference signal comprises:
    determining, by the first device, a channel parameter of a first channel based on the first reference signal, wherein the first device comprises $M$ receive antennas; the second device comprises the $N$ units, wherein $M$ and $N$ are integers greater than 1; the first channel comprises $M*N$ subchannels; the channel parameter of the first channel comprises a channel parameter of each of the $M*N$ subchannels; and the channel parameter of each subchannel comprises a channel parameter of the subchannel on each subcarrier in the system operating bandwidth.

13. The method according to claim 12, wherein the method further comprises:
    sending, by the first device, the channel parameter of the first channel to a third device.

14. The method according to any one of claims 1 to 13, wherein before the receiving, by a first device, a first reference signal, the method further comprises:
    sending, by the first device, configuration information to the second device, wherein the configuration information indicates the second device to perform spectrum shifting on the second reference signal.

15. A communication method, wherein the method comprises:

    obtaining, by a second device, a second reference signal; and
    sending, by the second device, a first reference signal, wherein the first reference signal is a reference signal determined by the second device by performing spectrum shifting on the second reference signal, a frequency of the first reference signal is different from a frequency of the second reference signal, and the first reference signal is used for channel estimation.

16. The method according to claim 15, wherein there are a plurality of first reference signals, and frequencies of the plurality of first reference signals are different.

17. The method according to claim 16, wherein frequencies of any two of the first reference signals are spaced by at least one subcarrier.

18. The method according to claim 16 or 17, wherein the sending, by the second device, a first reference signal comprises: simultaneously sending, by the second device, the plurality of first reference signals, or sending, by the second device, the plurality of first reference signals in a time-sharing manner.

19. The method according to claim 18, wherein the second device sends the plurality of first reference signals in the time-sharing manner; the second device comprises $N$ units, wherein $N$ is an integer greater than 1; and frequencies of first reference signals sent by the second device every two times meet a first condition or a second condition, wherein the first condition means that a frequency of a first reference signal sent by an $i^{th}$ unit of the second device for an $(l+j)^{th}$ time is the same as a frequency of a first reference signal sent by an $(i+j)^{th}$ unit of the second device for an $l^{th}$ time, and the second condition means that a frequency of a first reference signal sent by an $N^{th}$ unit of the second device for the $(l+j)^{th}$ time is the same as a frequency of a first reference signal sent by a $1^{st}$ unit of the second device for the $l^{th}$ time, wherein $l$ is a positive integer, $j$ is a positive integer, and $i$ is an integer ranging from 1 to $N$-$j$.

20. The method according to any one of claims 15 to 19, wherein there are a plurality of second reference signals, and each of the second reference signals is used by the second device to determine one corresponding first reference signal.

21. The method according to any one of claims 15 to 19, wherein there are a plurality of second reference signals, and each of the second reference signals is used by the second device to determine a plurality of corresponding first reference signals.

22. The method according to claim 21, wherein one of any two of the second reference signals is used by the second device to determine S first reference signals, the other one of the any two of the second reference signals is used by the second device to determine T first reference signals, and frequencies of the S first reference signals are different from frequencies of the T first reference signals, wherein S and T are integers greater than 1.

23. The method according to claim 22, wherein a spectrum shifting amount of the second device for the other one of the any two second reference signals is a first value, a frequency spacing between a maximum harmonic frequency and a minimum harmonic frequency of the S first reference signals is a second value, and twice the first value is greater than or equal to a positive integer multiple of the second value.

24. The method according to any one of claims 15 to 19, wherein there are a plurality of second reference signals, and frequencies of the plurality of second reference signals are different.

25. The method according to claim 24, wherein a frequency domain spacing between any two of the plurality of second reference signals is less than a system operating bandwidth, a frequency of one of the any two second reference signals is a third value, a frequency of the other one of the any two second reference signals is a fourth value, a spectrum shifting amount of the second device for the second reference signal is a fifth value, and a sum of a positive integer multiple of the fifth value and the fourth value is the same as the third value.

26. The method according to any one of claims 15 to 25, wherein the receiving, by a second device, a second reference signal comprises:
simultaneously receiving, by the second device, the plurality of second reference signals, or receiving, by the second device, the plurality of second reference signals in a time-sharing manner.

27. The method according to any one of claims 15 to 26, wherein a frequency spacing between the first reference signal and the second reference signal covers the system operating bandwidth.

**28.** The method according to any one of claims 15 to 27, wherein before the sending, by the second device, a first reference signal, the method further comprises:
receiving, by the second device, configuration information from the first device, wherein the configuration information indicates the second device to perform spectrum shifting on the second reference signal.

**29.** A communication apparatus, wherein the apparatus comprises a transceiver module and a processing module, wherein

the transceiver module is configured to receive a first reference signal, wherein the first reference signal is a reference signal determined by a second device by performing spectrum shifting on a second reference signal, and a frequency of the first reference signal is different from a frequency of the second reference signal; and the processing module is configured to perform channel estimation based on the first reference signal.

**30.** The apparatus according to claim 29, wherein there are a plurality of first reference signals, and frequencies of the plurality of first reference signals are different.

**31.** The apparatus according to claim 30, wherein frequencies of any two of the first reference signals are spaced by at least one subcarrier.

**32.** The apparatus according to claim 30 or 31, wherein the transceiver module is configured to simultaneously receive the plurality of first reference signals, or the transceiver module is configured to receive the plurality of first reference signals in a time-sharing manner.

**33.** The apparatus according to claim 32, wherein the transceiver module receives the plurality of first reference signals in the time-sharing manner; the second device comprises $N$ units, wherein $N$ is an integer greater than 1; and frequencies of first reference signals received by the transceiver module every two times meet a first condition or a second condition, wherein the first condition means that a frequency of a first reference signal that is received by the transceiver module for an $(l+j)^{th}$ time and that is from an $i^{th}$ unit of the second device is the same as a frequency of a first reference signal that is received by the transceiver module for an $l^{th}$ time and that is from an $(i+j)^{th}$ unit of the second device, and the second condition means that a frequency of a first reference signal that is received by the transceiver module for the $(l+j)^{th}$ time and that is from an $N^{th}$ unit of the second device is the same as a frequency of a first reference signal that is received by the transceiver module for the $l^{th}$ time and that is from a $1^{st}$ unit of the second device, wherein $l$ is a positive integer, $j$ is a positive integer, and $i$ is an integer ranging from 1 to $N-j$.

**34.** The apparatus according to any one of claims 29 to 33, wherein the transceiver module is further configured to send the second reference signal before receiving the first reference signal.

**35.** The apparatus according to any one of claims 29 to 34, wherein there are a plurality of second reference signals, and each of the second reference signals is used by the second device to determine one corresponding first reference signal.

**36.** The apparatus according to any one of claims 29 to 35, wherein there are a plurality of second reference signals, and each of the second reference signals is used by the second device to determine a plurality of corresponding first reference signals.

**37.** The apparatus according to claim 36, wherein one of any two of the second reference signals is used by the second device to determine S first reference signals, the other one of the any two of the second reference signals is used by the second device to determine T first reference signals, and frequencies of the S first reference signals are different from frequencies of the T first reference signals, wherein S and T are integers greater than 1.

**38.** The apparatus according to any one of claims 29 to 34, wherein there are a plurality of second reference signals, and frequencies of the plurality of second reference signals are different.

**39.** The apparatus according to any one of claims 29 to 38, wherein a frequency spacing between the first reference signal and the second reference signal covers a system operating bandwidth.

**40.** The apparatus according to any one of claims 29 to 39, wherein the processing module is configured to determine a channel parameter of a first channel based on the first reference signal; the apparatus comprises $M$ receive antennas; the second device comprises the $N$ units, wherein $M$ and $N$ are integers greater than 1; the first channel comprises $M*N$ subchannels; the channel parameter of the first channel comprises a channel parameter of each of the $M*N$ subchannels; and the channel parameter of each subchannel comprises a channel parameter of the subchannel on each subcarrier in the system operating bandwidth.

41. The apparatus according to claim 40, wherein the transceiver module is further configured to send the channel parameter of the first channel to a third device.

42. The apparatus according to any one of claims 29 to 41, wherein the transceiver module is further configured to send configuration information to the second device before receiving the first reference signal, wherein the configuration information indicates the second device to perform spectrum shifting on the second reference signal.

43. A communication apparatus, wherein the apparatus comprises a transceiver module and a processing module, wherein

the processing module is configured to obtain a second reference signal; and
the transceiver module is configured to send a first reference signal, wherein the first reference signal is a reference signal determined by the apparatus by performing spectrum shifting on the second reference signal, a frequency of the first reference signal is different from a frequency of the second reference signal, and the first reference signal is used for channel estimation.

44. The apparatus according to claim 43, wherein there are a plurality of first reference signals, and frequencies of the plurality of first reference signals are different.

45. The apparatus according to claim 44, wherein frequencies of any two of the first reference signals are spaced by at least one subcarrier.

46. The apparatus according to claim 44 or 45, wherein the transceiver module is configured to simultaneously send the plurality of first reference signals, or the transceiver module is configured to send the plurality of first reference signals in a time-sharing manner.

47. The apparatus according to claim 46, wherein the transceiver module sends the plurality of first reference signals in the time-sharing manner; the apparatus comprises $N$ units, wherein $N$ is an integer greater than 1; and frequencies of first reference signals sent by the apparatus every two times meet a first condition or a second condition, wherein the first condition means that a frequency of a first reference signal sent by an $i^{th}$ unit of the apparatus for an $(l+j)^{th}$ time is the same as a frequency of a first reference signal sent by an $(i+j)^{th}$ unit of the apparatus for an $l^{th}$ time, and the second condition means that a frequency of a first reference signal sent by an $N^{th}$ unit of the apparatus for the $(l+j)^{th}$ time is the same as a frequency of a first reference signal sent by a $1^{st}$ unit of the apparatus for the $l^{th}$ time, wherein $l$ is a positive integer, $j$ is a positive integer, and $i$ is an integer ranging from 1 to $N-j$.

48. The apparatus according to any one of claims 43 to 47, wherein there are a plurality of second reference signals, and each of the second reference signals is used by the apparatus to determine one corresponding first reference signal.

49. The apparatus according to any one of claims 43 to 47, wherein there are a plurality of second reference signals, and each of the second reference signals is used by the apparatus to determine a plurality of corresponding first reference signals.

50. The apparatus according to claim 49, wherein one of any two of the second reference signals is used by the apparatus to determine S first reference signals, the other one of the any two of the second reference signals is used by the apparatus to determine T first reference signals, and frequencies of the S first reference signals are different from frequencies of the T first reference signals, wherein S and T are integers greater than 1.

51. The apparatus according to claim 50, wherein a spectrum shifting amount of the apparatus for the other one of the any two second reference signals is a first value, a frequency spacing between a maximum harmonic frequency and a minimum harmonic frequency of the S first reference signals is a second value, and twice the first value is greater than or equal to a positive integer multiple of the second value.

52. The apparatus according to any one of claims 43 to 47, wherein there are a plurality of second reference signals, and frequencies of the plurality of second reference signals are different.

53. The apparatus according to claim 52, wherein a frequency domain spacing between any two of the plurality of second reference signals is less than a system operating bandwidth, a frequency of one of the any two second reference signals is a third value, a frequency of the other one of the any two second reference signals is a fourth value, a spectrum shifting amount of the apparatus for the second reference signal is a fifth value, and a sum of a positive integer multiple of the fifth value and the fourth value is the same as the third value.

54. The apparatus according to any one of claims 43 to 53, wherein the transceiver module is configured to simultaneously receive the plurality of second reference signals, or the transceiver module is configured to receive the plurality of second reference signals in a time-sharing manner.

55. The apparatus according to any one of claims 43 to 54, wherein a frequency spacing between the first reference signal and the second reference signal covers the system operating bandwidth.

56. The apparatus according to any one of claims 43 to 55, wherein the transceiver module is further configured to receive configuration information from the first device before sending the first reference signal, wherein the configuration information indicates the apparatus to perform spectrum shifting on the second reference signal.

57. A communication apparatus, wherein the apparatus comprises a processor, wherein
the processor is configured to perform the method according to any one of claims 1 to 14 or perform the method according to any one of claims 15 to 28.

58. A communication apparatus, wherein the apparatus comprises a logic circuit and an input/output interface, wherein

the input/output interface is configured to receive code instructions and transmit the code instructions to the logic circuit; and
the logic circuit is configured to run the code instructions to perform the method according to any one of claims 1 to 14 or perform the method according to any one of claims 15 to 28.

59. A computer-readable storage medium, wherein the computer-readable storage medium comprises a computer program or instructions, and when the computer program or the instructions are run on a computer, the computer is enabled to perform the method according to any one of claims 1 to 14 or perform the method according to any one of claims 15 to 28.

60. A computer program product, wherein the computer program product comprises: a computer program or instructions, and when the computer program or the instructions are run on a computer, the computer is enabled to perform the method according to any one of claims 1 to 14 or perform the method according to any one of claims 15 to 28.

61. A communication system, comprising the communication apparatus according to any one of claims 29 to 42 and the communication apparatus according to any one of claims 43 to 56.

FIG. 1

FIG. 2

FIG. 3

Spectrum shifting amount of a second device for a
second reference signal
(bandwidth covered through one time of measurement)

System operating bandwidth

$f$

(a)

System operating bandwidth

Bandwidth covered
through a 1$^{st}$ time
of measurement

Bandwidth covered
through a 2$^{nd}$ time
of measurement

Bandwidth covered
through a 3$^{rd}$ time
of measurement

$f$

Frequency of the
second reference signal
obtained through the 1$^{st}$
time of measurement

Frequency of the second
reference signal obtained
through the 2$^{nd}$ time of
measurement

Frequency of the
second reference signal
obtained through the 3$^{rd}$
time of measurement

(b)

FIG. 4

Frequency
range 2

Frequency
range 1

| Sub-frequency range 4 | Sub-frequency range 2 | Sub-frequency range 1 | Sub-frequency range 3 |

$f$

$fs\text{-}min$   $f1$   $\Delta f$   $fs\text{-}max$

FIG. 5

(a)

(b)

FIG. 6

| RAN device | RIS | UE |
|---|---|---|

S701a: Determine whether the G channel needs to be updated

S701b: Determine whether the G channel needs to be updated

**Estimation of a G channel**

S702: First configuration information

S703: First pilot information

S704: Second reference signal

S705: First reference signal

S706: Determine a channel parameter of the G channel based on the first reference signal

S707: Determine whether uplink transmission or downlink transmission needs to be performed

**Uplink estimation of an r channel and a d channel**

S708: Second configuration information

S709: Second pilot information

S710: Uplink pilot signal

S711: Uplink pilot signal

S712: Determine channel parameters of the r channel and the d channel based on the uplink pilot signal

**Downlink estimation of the r channel and the d channel**

S713: Second configuration information

S714: Channel parameter of the G channel

S715: Downlink pilot signal

S716: Downlink pilot signal

S717: Determine the channel parameters of the r channel and the d channel based on the downlink pilot signal

FIG. 7

FIG. 8

| RAN device | RIS | UE |
|---|---|---|

S901a: Determine whether the G channel needs to be updated

S901b: Determine whether the G channel needs to be updated

**Estimation of a G channel**

S902: First configuration information

S903: Second reference signal

S904: First reference signal

S905: Determine a channel parameter of the G channel based on the first reference signal

S906: Determine whether uplink transmission or downlink transmission needs to be performed

**Uplink estimation of an r channel and a d channel**

S907: Second configuration information

S908: Second pilot information

S909: Uplink pilot signal

S910: Uplink pilot signal

S911: Determine channel parameters of the r channel and the d channel based on the uplink pilot signal

**Downlink estimation of the r channel and the d channel**

S912: Third configuration information

S913: Channel parameter of the G channel

S914: Downlink pilot signal

S915: Downlink pilot signal

S916: Determine the channel parameters of the r channel and the d channel based on the downlink pilot signal

FIG. 9

Communication apparatus 1000

Processing module ⟵1002⟶ Transceiver module

1001

FIG. 10

Communication apparatus 1100

Receiving module ⟵1101⟶ Sending module

1102

FIG. 11

Communication
apparatus 1200

1201

Processor

CPU 0

CPU 1

1204

Processor

CPU 0

CPU 1

1202

Memory

1203

Transceiver

FIG. 12

Communication apparatus 1300

1301

Logic
circuit

Input/
Output
interface

1302

FIG. 13

## INTERNATIONAL SEARCH REPORT

International application No.

**PCT/CN2022/127129**

**A. CLASSIFICATION OF SUBJECT MATTER**

H04W 24/00(2009.01)i; H04L 25/02(2006.01)n

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

WPABS; CNTXT; CNKI; ENTXT; 3GPP: 频率, 频谱, 搬移, 频移, 搬迁, 参考, 导频, 智能超表面, 信道, 估计, frequency, spectrum, mov+, reference, pilot, RIS, channel, estimat+

**C. DOCUMENTS CONSIDERED TO BE RELEVANT**

| Category* | Citation of document, with indication, where appropriate, of the relevant passages | Relevant to claim No. |
|---|---|---|
| X | CN 104639486 A (HUAWEI TECHNOLOGIES CO., LTD.) 20 May 2015 (2015-05-20) claims 1-31, and description, paragraphs [0155]-[0362], and figure 3 | 1-4, 6-18, 20-21, 24, 26-32, 34-46, 48-49, 52, 54-61 |
| X | CN 103580703 A (HUAWEI TECHNOLOGIES CO., LTD.) 12 February 2014 (2014-02-12) description, paragraphs [0035]-[0164], and figures 1-11 | 1-4, 6-18, 20-21, 24, 26-32, 34-46, 48-49, 52, 54-61 |
| X | CN 108337198 A (SHANGHAI AEROSPACE ELECTRONIC CO., LTD. et al.) 27 July 2018 (2018-07-27) description, paragraphs [0029]-[0087] | 1-4, 6-18, 20-21, 24, 26-32, 34-46, 48-49, 52, 54-61 |
| A | US 2010027698 A1 (POSDATA CO., LTD.) 04 February 2010 (2010-02-04) entire document | 1-61 |
| A | US 2019044686 A1 (HON HAI PRECISION INDUSTRY CO., LTD.) 07 February 2019 (2019-02-07) entire document | 1-61 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 December 2022** | **09 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/127129**

| Patent document cited in search report | | | Publication date (day/month/year) | Patent family member(s) | | | Publication date (day/month/year) |
|---|---|---|---|---|---|---|---|
| CN | 104639486 | A | 20 May 2015 | US | 2016254869 | A1 | 01 September 2016 |
| | | | | WO | 2015070635 | A1 | 21 May 2015 |
| | | | | RU | 2016123048 | A | 19 December 2017 |
| | | | | EP | 3059917 | A1 | 24 August 2016 |
| CN | 103580703 | A | 12 February 2014 | WO | 2014019397 | A1 | 06 February 2014 |
| | | | | EP | 2874318 | A1 | 20 May 2015 |
| | | | | US | 2015139348 | A1 | 21 May 2015 |
| CN | 108337198 | A | 27 July 2018 | | None | | |
| US | 2010027698 | A1 | 04 February 2010 | WO | 2008044888 | A1 | 17 April 2008 |
| | | | | US | 2013034175 | A1 | 07 February 2013 |
| | | | | JP | 2010506529 | A | 25 February 2010 |
| US | 2019044686 | A1 | 07 February 2019 | US | 2020052854 | A1 | 13 February 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111242524